# EUROPEAN PATENT SPECIFICATION

(11) **EP 4 423 203 B1**
(45) Date of publication and mention of the grant of the patent: **20.08.2025**
(21) Application number: 23704340.1
(22) Date of filing: 09.02.2023
(51) Int. Cl.: C09D 11/101, C09D 11/06, C09D 11/08, C09D 11/10, C09D 11/12, C09D 11/105, C09D 11/108

(54) **SUSTAINABLE RADIATION-CURABLE HYBRID OFFSET INKS**
NACHHALTIGE STRAHLUNGSHÄRTBARE HYBRIDE OFFSET-TINTEN
ENCRES OFFSET HYBRIDES DURABLES DURCISSABLES PAR RAYONNEMENT

(30) Priority: 09.02.2022 US 202263308106 P
(43) Date of publication of application: 04.09.2024
(73) Proprietor: Sun Chemical B.V., 1382 LV Weesp (NL)
(72) Inventor: PETIT, Annabelle, 44860 Saint Aignan de Grand Lieu (FR); SAVARMAND, Saeid, Carlstadt, New Jersey 07072 (US); JOHNKE, Christian, 63791 Karlstein am Main (DE); BLAIZEAU, Jean-Hugues, 60150 Thourotte (FR); DELAHAYE, Freddy, 44860 Saint Aignan de Grand Lieu (FR)
(74) Representative: Carpmaels & Ransford LLP
(86) International application number: PCT/EP2023/053227
(87) International publication number: WO 2023/152240

(56) References cited:
- US-A1- 2013 309 459
- US-A1- 2019 023 916
- US-A1- 2021 087 413

## Description

### FIELD OF THE INVENTION

The present invention relates to high Bio Renewable Content (BRC) radiation curable hybrid inks and coatings comprising energy-curable monomers, oligomers and photo initiators, as well as raw materials used in conventional offset inks, such as oils, alkyd resins, and hard resins. The radiation-curable hybrid inks and coatings are suitable for application by lithographic printing.

### BACKGROUND

Conventional inks for lithographic printing are formulated with vegetable or mineral oils, alkyd resins, and phenolic or hydrocarbon resins. The oils penetrate into the substrate to induce physical drying or setting ("quick-set" effect). However, the quick-set effect cannot be employed when printing on non-porous substrates, such as plastic films. For printing on non-porous substrates, inks are formulated using vegetable oils and their esters (known as drying oils) to dissolve the hard resin and for reducing viscosity. The oils in lithographic inks participate in the drying of the inks by an oxidation reaction.

A major disadvantage of conventional lithographic inks is the slow drying speed. Conventional lithographic inks based on oils and alkyds dry slowly by penetration of the substrate (setting) and oxidation. This negatively impacts the productivity a converter can achieve. Thus, a need exists for producing faster drying inks to improve productivity.

Energy-curable inks have also been employed in lithographic printing. Energy-curable inks have improved gloss and resistance properties. However, there are drawbacks to using energy-curable inks for lithographic printing. For example, pigment wetting of energy-curable inks is not as good as for conventional inks, resulting in print density problems. In addition, energy-curable inks show problems with low shear viscosity, less stable emulsion with water, and higher tack. The lack of stability in an emulsion with water results in a smaller water balance on the printing press. Higher tack may lead to picking of fibers or coating when printing on paper or board. Moreover, classification of raw materials used in energy-curable inks is much more critical for health than in conventional system. The materials used for radical polymerization are mainly derived from syntheitc processes using petrochemically derived materials. Bio-sourced material usage is limited in inks of the art, which provides energy-curing inks with low BRC values.

In general, inks, either conventional or UV drying, contain waxes to enable good printing and conversion processes, by avoiding scratches and print deterioration. Theses waxes are usually synthetic, based on micronized polyethylene (PE) and polytetra fluoroethylene (PTFE). The European Chemicals Agency (ECHA) proposed the regulatory definition of a microplastic as a *"material consisting of solid polymer-containing particles, to which additives or other substances may have been added, and where* ≥*1% weight by weight (w*/*w) of particles have (i) all dimensions 1 nm* ≤ *x* ≤ *5 mm, or (ii), for fibers, a length of 3 nm* ≤ *x* ≤ *15 mm and length to diameter ratio of >3. Polymers that occur in nature that have not been chemically-modified (other than by hydrolysis) are excluded, as are polymers that are (bio)degradable".* Regulation on microplastics does not directly affect ink formulations because particles are dispersed into the network of polymerized binders and are not free. However, in terms of sustainable development, high BRC inks should not contain any synthetic waxes, such as PE or PTFE wax.

Depending on the requirements of a particular print job, a converter may want to use both conventional and energy-curable lithographic inks. Conventional inks are generally printed with N-buna-nitrile rubber (NBR) rollers, while energy-curable inks are generally printed with ethylene-propylene-diene-monomer (EPDM) rollers. Energy-curable inks are not compatible with NBR rollers, and conventional inks are not compatible with EPDM rollers. Use of an incompatible ink leads to roller swelling, thus compromising print-quality. To employ both conventional and energy-curable inks on the same press, a converter must switch rubber rollers and blankets on the printing press, to a hybrid system.

Often, to improve gloss of prints made with conventional inks, a converter will apply an energy-curable topcoat over the printed substrate. However, the energy-curable topcoat is typically not compatible with oil and alkyd-based inks, resulting in *"gloss back*". Gloss back is the phenomenon where a radiation-curable coating applied over a conventional ink loses gloss within a short period after cure, typically within a day. To improve gloss back, it is generally necessary to apply a water-based primer between the print and the energy-curable topcoat.

In an attempt to overcome these problems, there has been an effort to develop "hybrid" inks which comprise both conventional ink components and energy-curable components. Hybrid inks are described by Paul Gaevert at Radtech Conference Nov. 3-5, 2003, Conference Proceedings "Ink performance properties of UV, conventional and hybrid sheet-fed inks*"* Tony Bean in "Radtech Report October 2009, "Hybrid Sheetfed lithographic systems - State of the Art*;"* and Dieter Kleeberg in "Quality enhancement with hybrid production" in Process 2006 (publication of press maker KBA).

Radiation-curable hybrid inks are radiation-curable inks which also contain raw materials from conventional inks, such as oils, alkyd resins, and hard resins. Hybrid inks combine different drying properties and preferably dry under UV (ultraviolet) or EB (electron beam) radiation, and also by oxidation with air or heat drying. Moreover, the inks can dry by penetration of the oils into the substrate, like oil-based conventional inks. One advantage that may be observed with hybrid inks is that they can be directly overprinted with a radiation-curable coating with only minor loss in gloss (i.e. minor gloss back). Consequently, an aqueous primer between the ink and coating, as well as a double coater on press, can be spared.

However, because radiation-curable hybrid inks are based on chemically different materials, such as non-polar vegetable oils or minerals, and phenolic or hydrocarbon resins, in combination with the more polar monomeric acrylates and resins, good compatibility is not easy to achieve.

One drawback of hybrid inks is that the stability of the hybrid ink has to be balanced. In the presence of oxygen, the oil-based materials can start to increase viscosity due to oxidation, especially in the presence of a dryer, whereas, on the other hand, oxygen stabilizes radiation-curable components such as acrylates.

A major disadvantage of the currently available hybrid inks is that due to the incorporation of oils and alkyds, which dry slowly by penetration (setting) and oxidation, these inks have slower drying speeds. As the determining factor for the ink drying of these inks is the setting of the oil and oxidation of the alkyd, a converter does not achieve the productivity (line speed) associated with a 100% radiation-curable ink. This is especially critical for non-porous substrates, into which oils do not penetrate.

As a result, typical hybrid inks as described in the literature contain a large amount of radiation-curable materials, but only a smaller amount of oils and alkyds. The formulation of a typical radiation-curable hybrid ink is given in the proceedings of Radtech conference (Paul Geavert, Radtech Europe 2003), where the materials of conventional inks (oils and alkyds) are limited to 15%. In general, typical radiation-curable hybrid inks of the art comprise 5-15% vegetable oils and alkyd resins, 0-15% polyester acrylates, 0-10% epoxy acrylates, 0-50% vegetable oil acrylates, 5-15% acrylic monomers, 14-24% pigments, 4-8% fillers, 4-8% photoinitiators, and less than 1% stabilizers and inhibitors. This is also confirmed in a review article ("Hybrid Sheetfed lithographic systems - State of the Art", Tony Bean, Radtech report 2009), wherein typical hybrid inks contain only a small amount of conventional raw materials.

The above-mentioned formulation ranges show slow curing speed (low reactivity), as well as low solvent-resistance, due to the non-reactive inert oils and alkyds present However, due to the limited amount of conventional materials, these inks exhibit very similar lithography compared to a typical UV-ink. The lithographic performance of typical UV-inks is inferior to conventional inks using non-reactive inert oils and alkyds.

Thus, the only advantage of the above-mentioned formulation ranges is that such typical radiation-curable hybrid inks can be run both on rollers for radiation-curable inks as well as those for conventional inks. However, the target of getting a substantially better lithography is not achieved.

Moreover, many hybrid inks of the art comprise compounds that are classified as carcinogenic, mutagenic or reprotoxic (CMR) under the EU Classification, Labelling and Packaging of substances (CLP) Regulation 1272/2008. As these compounds are hazardous to human health it is desirable to identify new hybrid ink and coating compositions that do not comprise CMR compounds and that have comparable properties, such as gloss back, tack, viscosity, and curing, to compositions of the art. US2021/087413 relates to a chlorine-free, low migration, electron-beam (EB) curable composition, which has particular utility as a primer, particularly one which is applied by offset printing.

It can therefore be seen that the demands required from the formulation of high BRC, low CMR compound-containing, hybrid inks and coatings is enormously complex and optimizing the properties of these inks and coatings is equally complex. From a lithographic standpoint, it is advantageous to have an ink comprising a high amount of oils, alkyds, and hard resins. Conversely, in view of drying speed, productivity and gloss back, a high amount of radiation-curable monomers and oligomers is favorable.

### SUMMARY OF THE INVENTION

The invention is defined by the appended claims. The present invention offers a complex mix of conventional and energy-curing raw materials with high BRC content. The inks and coatings of the invention do not comprise synthetic waxes and have good stability over time. The inks show good lithographic properties and can be overprinted with a UV varnish with only minor gloss back and have good inter-coat adhesion. The inventive hybrid inks and coatings exhibit good lithographic properties relative to 100% radiation-curable inks, due to better pigment wetting of the alkyds and conventional resins, relative to (meth)acrylate monomers and oligomers. The inventive sustainable hybrid inks and coatings of the invention may be free of carcinogenic, mutagenic, or reprotoxic (CMR) materials.

The present invention provides a high BRC lithographic radiation hybrid ink or coating providing a minimum Percent of Modern Carbon (PMC) of at least 40% and preferably at least 45% according to ASTM D6866 (method B) .

The present invention provides a high BRC lithographic radiation hybrid ink or coating composition comprising:
a) 10 wt% to 30 wt% one or more inert hard resins selected from the group consisting of rosin resins, rosin resin derivatives, hydrocarbon resins, modified hydrocarbon resins, iso diallyl phthalate resins, non-phthalate allyl resins, and combinations thereof;
b) 10 to 60% non-UV raw material selected from the group consisting of vegetable oils, vegetable oil esters, alkyds resins, antioxidants, and combinations thereof;
   wherein a non-UV raw material is a compound that is inert and does not react under photoinitiation conditions; and
c) 5 wt% to 45 wt% one or more multifunctional (meth)acrylate monomers and/or oligomers;
d) d) 0-10% monofunctional (meth)acrylate monomers and/or oligomers;
   and
wherein, the ink or coating comprises ≥ 40% BRC, more preferably ≥ 45% BRC.

The lithographic radiation hybrid ink or coating composition preferably comprises less than 10 wt% of CMR compounds, and more preferably less than 5wt% CMR compounds, and even more preferably is substantially free of CMR compounds.

The present invention also provides more sustainable composition using biosourced waxes instead of synthetic waxes. The present invention also provides a method of printing an article comprising applying the lithographic radiation-curable hybrid ink of the invention as a UV-coldset lithographic ink, or as a UV-heatset lithographic ink.

The present invention further provides a printed article comprising the energy-curable hybrid lithographic ink of the invention. The present invention also provides conventional concentrated pigment bases and energy- curing technology varnish (TV) to simplify spot colour preparation, to just mixing the required coloured bases with the TV in the appropriate ratio.

### DETAILED DESCRIPTION OF THE INVENTION

It is to be understood that the foregoing general description and the following detailed description are exemplary and explanatory only, and are not restrictive of any subject matter claimed.

Unless otherwise defined, all technical and scientific terms used herein have the same meaning as is commonly understood by one of skill in the art to which the inventions belong.

The present invention provides radiation-curable hybrid inks and coatings, having good lithographic properties and a low gloss-back effect when overprinted with a UV-varnish. The inks are useful for lithographic wet printing.

### Definitions

- In this application, the use of the singular includes the plural unless specifically stated otherwise. As used herein, the singular forms *"a," "an"* and *"the"* are intended to include the plural forms as well, unless the context clearly indicates otherwise.
- In this application, the use of *"or"* means *"and*/*or"* unless stated otherwise.
- As used herein, the terms *"comprises"* and/or *"comprising"* specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising."
- As used herein, the term *"(meth)acrylate"* refers to both acrylate and methacrylate compounds. When the term "acrylate" is used alone, it is understood that it encompasses both acrylate and methacrylate compounds.
- As used herein, an *"energy-curable"* or *"radiation-curable"* ink or coating composition is a composition that can be cured by any suitable source of actinic radiation. Suitable sources of UV radiation include, but are not limited to, a high-voltage mercury bulb, a medium-voltage mercury bulb, a xenon bulb, a carbon arc lamp, a metal halide bulb, iron-doped lamps, a UV-LED lamp or sunlight. Other sources of radiation include, but are not limited to, microwave, infrared, electron beam, visible light, x-ray, laser, and the like.
- As used herein, a *"radiation-curable hybrid ink"* or *"energy-curable hybrid ink"* is an ink or coating composition which contains energy-curable components (for example, but not limited to, acrylate monomers), and also contains raw materials from conventional inks, such as, but not limited to, oils, alkyd resins, and hard resins.
- As used herein, the term *"article"* or *"articles"* means a substrate or product of manufacture. Examples of articles include, but are not limited to: substrates such as paper, plastic, plastic or polymer film, glass, ceramic, metal, composites, and the like; and products of manufacture such as publications (e.g. brochures), labels, and packaging materials (e.g. cardboard sheet or corrugated board), containers (e.g. bottles, cans), a polyolefin (e.g. polyethylene or polypropylene), a polyester (e.g. polyethylene terephthalate), a metalized foil (e.g. laminated aluminum foil), metalized polyester, a metal container, and the like.
- As used herein, the terms *"ink," "inks," "coating," "coatings," "ink and coating,"* and *"inks and coatings"* are used interchangeably.
- As used herein, the terms *"inert resin"* and *"inert hard resin"* are used interchangeably.
- The term *"monomer"* refers to a compound that is capable of being polymerized and does not comprise multiple monomeric units.
- The term *"oligomer"* refers to a compound comprising multiple monomeric units. As used herein, the term *"oligomer"* refers to such a compound with a number average molecular weight of at least 400 Da.
- The term *"non-UV"* refers to compounds that are inert and do not react under photoinitiation conditions, e.g., UV light in the presence of a photoinitiator. The term excludes monomers and oligomers that can be initiated under said conditions, e.g., (meth)acrylates.
- Throughout this disclosure, all parts and percentages are by weight (wt% or mass% based on the total weight of the composition, including any solvents) and all temperatures are in °C unless otherwise indicated.
- Unless otherwise indicated, all method steps are to be performed in the order in which they are recited.
- *Compatibility:* as used herein, compatabilty of components means that the components are miscible at room temperature (23 °C) and do not undergo phase separation for at least one week after mixing.
- As used herein, solubility and compatibility are used interchangeably.
- *Lithographic:* a composition suitable for use in lithographic printing.

### Radiation-curable hybrid inks and coatings

The present application provides energy-curable hybrid inks and coatings suitable for lithographic printing. The inks and coatings of the invention are balanced radiation-curable hybrid inks and coatings containing a mixture of conventional oils and alkyds and inert hard resin.

The present invention is defined by claim 1 and provides a lithographic radiation-curable hybrid ink or coating composition comprising:
a) 10 wt% to 30 wt% one or more inert hard resins selected from the group consisting of rosin resins, rosin resin derivatives, hydrocarbon resins, modified hydrocarbon resins, iso diallyl phthalate resins, non-phthalate allyl resins, and combinations thereof; and
b) 10 to 60% non-UV raw material selected from the group consisting of vegetable oils, vegetable oil esters, alkyd resins, antioxidants, and combinations thereof, wherein a non-UV raw material is a compound that is inert and does not react under photoinitiation conditions; and
c) 5 wt% to 45 wt% one or more multifunctional acrylate monomers and/or oligomers
d) 0-10% monofunctional (meth)acrylate monomers and/or oligomers;
   and wherein the ink or coating composition comprises ≥ 40% biorenewable content.

### Advantages of the present invention

The resultant inks and coatings show good lithographic properties and can be overprinted with a UV varnish, with only minor gloss back, and good intercoat adhesion. The inventive hybrid inks exhibit good lithographic properties vs 100% radiation-curable inks due to better pigment wetting of alkyds and conventional resins vs acrylate monomers and oligomers. The inventive hybrid inks also provide faster drying and curing, increasing productivity, due to the inclusion of energy-curable monomers. The higher amount of conventional, acrylate compatible inert hard resins vs. oil and alkyds helps to reduce cure retardation and increase compatibility with acrylates.

The inventors have now unexpectedly observed that with the introduction of high amounts of inert hard resin, such as phenolic rosin resin, maleic rosin resin, and/or an aromatic hydrocarbon resin, the total amount of conventional ink ingredients in a hybrid ink can be considerably increased, which favors lithography, while minimally affecting the drying speed.

It is preferred to make a conventional varnish with high amounts of inert hard resin, such as maleic rosin, aromatic hydrocarbon resin, and/or phenolic rosin resin, in vegetable oils, which can be one or more drying oils, semi-drying oils and non-drying oils. A compatibility ratio must be determined between the conventional materials and the (meth)acrylated monomers and oligomers.

Though not bound by any specific theory, the inventors believe that the inert hard resin, even when present in large amounts, becomes immediately hard and solid once the radiation-curable acrylate matrix is dried, so that the drying properties (line speed) is less affected. The inks and coatings of the invention can be run at conventional printing speeds used in the art, such as at least 10,500 sheets / hour.

Moreover, a second matter to improve radiation cure is to partly replace or limit the often proposed vegetable oil acrylates, which are known for sluggish radiation cure, by a very reactive multifunctional acrylates, such as trifunctional acrylates including propoxylated glycerol triacrylate.

In contrast to the common belief that, for compatibility reasons, an oil-modified acrylate has to be used in hybrid inks as it is compatible with conventional oils and alkyds, the inventors found that many common multifunctional acrylates such as propoxylated glycerol triacrylate can be used to a large extent. However, it is more difficult to include highly ethoxylated acrylic monomers in large amounts, which can cause some incompatibility due to their polarity. While it is possible to use monofunctional acrylate(s) in the hybrid inks of the present invention, these materials are used at a maximum of 10%, more preferably a maximum of 5%.

Unlike many commercial hybrid inks and coatings, which are in fact more like a typical UV ink and contain only some conventional materials (e.g. Suncure Hybrite, Sun Chemical), the ink of the present invention contain a considerable amount of conventional ink raw materials to get a good lithographic performance. The amounts of the materials are balanced in a way that a good part of the oils and alkyd resins are exchanged for an acrylate soluble inert hard resin, such as for example a modified maleic rosin or modified phenolic rosin or hydrocarbon resin, so that the drying speed is less affected.

An advantage of the hybrid ink of the present invention is that the lithography is positively affected and shows less misting, less feedback and a wider water-window than typical 100% radiation-curable inks.

Another advantage, due to the oil-based components, is that the color strength and flow from the ink duct is often better than with 100% radiation-curable inks, as the oil-based materials such as alkyd resin evenly disperse and encapsulate pigments and lead to good color strength and good flow.

Because of intermediate behavior between conventional and UV, this ink can be run on press on conventional rollers but preferably on combi rollers using hybrid blanket or UV blanket. The ink of the present invention can preferably be washed with both conventional & UV press wash solutions, which was confirmed during the lab study and press trials on Heidelberg MO & Roland 700 presses.

### Properties of the hybrid inks and coatings of the invention

### Viscosity

Typically, radiation-curable hybrid inks and coatings of the present invention show a viscosity of 5-100 Pa.s at a shear rate of D = 50 1/s at 23 °C. Preferred is a viscosity of 20-60 Pa•s. The flow of the radiation-curable hybrid inks of the invention is also measured. Typical values for flow, as measured using the inclined plane test (e.g. an inclined aluminum plate) at an incline of 90° and with 1 ml of ink are 2-15 cm after 15 minutes.

### Tack

The inks of the present invention show a tack of 12 - 40 units measured using an "Inkometer" from Thwing Albert company. The more preferred tack is < 30 units. Tack affects print quality. If tack is too high, there may be damage to a substrate such as paper, known as "picking," where fibers of the paper substrate are pulled onto the ink blanket. Tack that is too low can lead to problems such as inadequate ink feed, transfer and distribution.

### Lithographic performance

The present hybrid ink has been run on Roland 700 press (combi rollers from Böttcher and hybrid blanket from Trelleborg; 4% Sunfount 480 and 3%IPA fount) at 12500 sheets/h on Invercote G substrate at 1.45 OD target. Lithographic behavior is similar to standard offset sheetfed ink with acceptable ink / water balance.

### Gloss Back

In order to exploit the highest productivity of a fast curing UV-ink, an in-line coating with a UV overprint coating, which also provides high gloss, is often preferred. However, when a conventional sheet-fed ink is overprinted with a UV-ink and end-cured, the initial gloss of the coating after cure often drops within 24 hours by 10-25 gloss points. This also depends on the kind of substrates and is especially critical on open porous, non-coated substrates. This is often counter-acted by applying an aqueous primer between conventional ink and UV overprint varnish. However, this requires a double coater with an integrated thermal or infrared dryer on press and an additional aqueous coating, which adds additional time and expense to the process. Although these drying systems are available for presses such as ManRoland 700 Ultima or Heidelberg Speedmaster Duo, they are more a niche technology. By using a radiation-curable hybrid ink of the present invention instead of a conventional ink, this can often be avoided and the gloss back effect is low without the need for an aqueous primer. With the hybrid inks of the present invention a balance was found with which a low gloss back effect is achieved giving a stable gloss, which is usually difficult to achieve with an aqueous coating. Nonetheless, the inks show a good lithographic performance. A small amount of gloss back may be seen when using the hybrid inks of the present invention, but preferably the degree of gloss back would be within preferred ranges. For high gloss hybrid inks (for example those with an initial gloss of > 60), a drop in gloss < 10 units is preferred; more preferably < 7 units.

### Replacement of Carcinogenic, Mutagenic, and Reprotoxic (CMR) compounds

Hybrid inks of the art may comprise compounds classified as the carcinogenic, mutagenic, or reprotoxic (CMR) under the EU Classification, Labelling and Packaging of substances (CLP) Regulation 1272/2008. Although the use of such compounds may provide hybrid inks and coatings with advantageous properties, these compounds are hazardous to health and their use should therefore be avoided. CMR compounds that are present in hybrid inks of the art include trimethylolpropane triacrylate (TMPTA), silicone diacrylates, such as Ebecryl 350, 2-dimethylamino-2-(4-methyl-benzyl)-1-(4-morpholin-4-yl-phenyl)-butan-1-one (ominirad 379), and multifunctional aminobenzoate derivatives such as 1,3-propanediol, 2-ethyl-2-(hydroxymethyl), polymer with oxirane, 4-(dimethylamino)benzoate (Genopol AB-2).

The inventors have discovered hybrid inks that do not comprise any CMR compounds and that have consistent properties with hybrid inks of the art. The ink or coating composition of the invention may comprise less than 20wt% of compounds classified as carcinogenic, mutagenic, or reprotoxic (CMR), and preferably less than 10wt% of CMR compounds, or even more preferably less than 5 wt% or CMR compounds. The ink or coating composition of the invention is most preferably substantially free of CMR compounds.

The inventors were surprised to find that replacing CMR compounds, including the multifunctional acrylate TMPTA described as essential components of the hybrid inks of the art, can be replaced by alternatve non-CMR compounds. Moreover, the inventors found that the resulting hybrid inks have at least comparable properties to compositions of the art comprising CMR compounds.

In particular, the inventors discovered that (meth)acrylates classified as CMR compounds could be replaced in compositions of the art by one or more (meth)acrylate oligomers selected from the group consisting of acrylated oils, epoxy acrylates, oil modified polyester acrylates , acrylated polyurethanes, acrylated polyacrylates, acrylated polyethers, acrylated amines, and combinations thereof, to provide hybrid inks and coating having comparable properties. In particular, at least comparable tack, viscosity, and cure, relative to the inks of the art comprising CMR compounds. Cure is assessd using the UV set-off test described in the examples.

More preferred is replacing the CMR compouds with one or more (meth)acrylate oligomers selected from the group consisting of polyester acrylates, acrylated polyurethanes, acrylated polyethers, and combinations thereof.

### Biorenewable Content

The hybrid ink or coating compositions of the invention have a biorenewable content of at least 40%, and preferably at least 45wt%. The inventors were surprised to find that replacing components of inks of the art with alternatives having a high BRC provided hybrid inks having at least comparable properties to compositions of the art not comprising the BRC content of the invention.

As used herein, sustainability refers to the BRC content of the material. Thus, improving the sustainability of packaging relates to increasing the BRC content of the packagaing, for example by using a lithographic radiation curable hybrid ink or coating composition of the invention instead of an alternative ink or curing.

### Components and their preferred amounts

### Hybrid inks and coatings

The hybrid inks and coatings of the present invention may comprise vegetable oils, vegetable oil esters, and vegetable alkyd resins in an amount between 0 and 40wt%, such as 0-25wt%. The hybrid inks and coatings of the present invention comprise inert hard resin in an amount of 10-30wt%; (meth)acrylate oligomers in an amount between 5 to 45wt%, optionally 10-40 wt%; and (meth)acrylate monomers and/or oligomers in an amount between 0-10%. The hybrid inks and coatings may comprise less than 20wt% of compounds classified as CMR. The hybrid inks and coatings optionally further comprise a colorant (pigment or dye) in an amount of between 0-40wt%; extenders and fillers in an amount of between 0-10wt%; photoinitiators in an amount of between 0-10wt%; and additives in an amount of between 0-4wt%.

The total amount of vegetable oils, vegetable oil and esters, alkyds and inert hard resin is >10%, more preferably > 20%, more preferably >30%, more preferably >40%, more preferably >50%. The amount of inert hard resin is >10%, preferably >13%.

The hybrid inks and coatings of the invention preferably comprise between 12 and 26wt% of inert hard resin, between 15 and 25wt% vegetable oils, vegetable oil esters, and vegetable alkyd resins, between 15 and 35 wt% of one or more multifunctional (meth)acrylate oligomers, and less than 5wt% monofunctional (meth)acrylate monomers and oligomers. The composition preferably has a biorenewable content of ≥ 45%. The hybrid inks and coatings preferably comprises less than 5wt% of compounds classified as CMR.

Of the 15 and 25wt% vegetable oils, vegetable oil esters, and alkyds, in the preferred hybrid inks and coatings of the invention, preferably between 15 and 20 wt% is vegetable oils and vegetable oil esters and between 3 and 10 wt% is vegetable alkyd resins. The precise formulation will also depend on the targeted ink properties.

### Ratio of inert resins, vegetable oils, vegetable oil esters, and alkyds to (meth)acrylate monomers and oligomers.

The vegetable oils, vegetable oil esters, and alkyds maybe incorporated into the inks or coatings of the invention in combination with the (meth)acrylate monomers and oligomers to provide a ratio of vegetable oils, vegetable oil esters, and alkyds to (meth)acrylate monomers and oligomers of between 0.1:1.0 and 2.0:0.0, preferably between 0.5:1.0 and 2.0:1.0, and more preferably between 0.5:1.0 and 1.0:1.0.

### Inert hard resins

The radiation-curable hybrid ink and coating compositions of the present invention comprise 10 wt% to 30 wt% one or more inert hard resins, based on the total weight of the ink or coating composition, wherein the inert hard resins are selected from the group consisting of rosin resins, rosin resin derivatives, hydrocarbon resins, modified hydrocarbon resins, iso diallyl phthalate resins, non-phthalate allyl resins, and combinations thereof. The inert hard resins for use in the invention are present in an amount of 10 wt% to 30wt%; such as preferably 12wt% to 30 wt%, and more preferably 12wt% to 25wt%, and even more preferably 15 wt% to 25 wt%, such as 15 wt% to 20 wt%.

An inert hard resin is typically a natural or synthetic, amorphous material, which, for the purposes of the present invention, preferably forms a tack-free film at room temperature after application to a substrate. Most of these materials are oligomers or polymers.

The inert hard resins for use in the invention are selected from the group consisting of rosin resins, rosin resin derivatives, hydrocarbon resins, modified hydrocarbon resins, iso diallyl phthalate resins, non-phthalate allyl resins, and combinations thereof. Any of these inert hard resins that is compatible and/or soluble with the acrylate monomers and oligomers, vegetable oils, vegetable oil esters, and vegetable alkyd resins, can be used in the hybrid inks of the present invention. Preferred inert hard resins include rosin resin derivatives, such as phenolic rosin resin, as well as iso diallyl phthalate resins and non-phthalate allyl resins such as diallylcycloalkane-based resins.

Rosin resin derivatives consist of a variety of isomers and different chemical structures, such as derivatives of abietic acid, levopimaric acid, neoabietic acid, palustric acid, dehydroabietic acid, pimaric acid and isopimaric acid. The rosin resin derivative for use in the invention may be modified with maleic anhydride (i.e., maleic rosin resin) or fumaric acid and esterified with polyols such as glycerol and pentaerythritol. The rosin resin for use in the invention is preferably a phenolic rosin resin.

The radiation-curable hybrid ink and coating compositions of the present invention may further comprise other resins. For example, the radiation-curable hybrid ink and coating compositions of the invention may comprise one or more resins selected from the group consisting of oil-modified phenolic resins, ketone resins, aldehyde-urea resins, oil modified polyester resins, melamine resins, epoxy resins, polyurethane resins, acrylic styrene resins, and combinations thereof, provided that the resin is soluble/compatible in the acrylic monomers, oligomers, oils and alkyds. When present, these additional resins may be present in an amount of 1 wt% to 20 wt%, based on the total weight of the ink or coating composition. For example, the additional resins are preferably present in an amount of 1wt% to 15 wt%; such as 5wt% to 15wt%; and more preferably in an amount of 10 wt% to 15 wt%.

### (Meth)acrylate oligomers

The radiation-curable hybrid ink and coating compositions of the invention further comprise one or more multifunctional (meth)acrylate oligomers. The one or more (meth)acrylate oligomers are preferably present in an amount of 0.1 wt% to 45 wt%, such as 1 wt% to 30 wt% based on the total weight of the ink or coating composition. The one or more (meth)acrylate oligomers are more preferably present in an amount of from 5wt% to 40wt%, such as 10 wt% to 40wt%, and even more preferably from 15wt% to 35wt%, based on the total weight of the ink or coating composition.

The (meth)acrylate oligomers for use in the invention have a number average molecular weight of at least 400 Da, such as preferably between 400 and 3,000 Daltons or between 1000 and 3000 Da. The (meth)acrylate oligomers for use in the invention preferably have an acrylate functionality > 2, and more preferably ≥ 4, and even more preferably ≥ 6.

Preferably, the (meth)acrylate oligomers have a viscosity of at least 5 Pa.s when measured according to the method described in the examples.

Examples of suitable acrylate oligomers include, but are not limited to, acrylated oils, based on linseed-, soy- and castor oil, epoxy acrylates, urethane acrylates, oil modified polyester acrylates such as Ebecryl 870 (Allnex), acrylated polyurethanes, acrylated polyacrylates, acrylated polyethers and acrylated amines, to impart rheology, pigment wetting, transfer, gloss, chemical resistance and other film properties. Preferred are acrylated oil, polyester acrylates such as oil-modified polyester acrylates, acrylated polyurethanes, acrylated polyethers, and combinations thereof.

The inventors have found that replacing lower molecular weight (meth)acrylates (i.e., components with molecular weights of less than 400 Da) with higher molecular weight oligomeric (meth)acrylates (i.e., components with number average molecular weights of at least 400 (such as between 400 and 3000 Da)) resulted in hybrid inks and coating compositions with improved misting. The (meth)acrylate monomers and (meth)acrylate oligomers of part c) preferably have a molecular weight of at least 400 Da.

### (Meth)acrylate monomers

The radiation-curable hybrid ink and coating compositions of the invention may comprise up to 45wt%, such as 5 wt% to 45 wt%, of one or more multifunctional (meth)acrylate monomers, based on the total weight of the ink or coating composition. The radiation-curable hybrid ink and coating compositions of the invention preferably comprise less than 15wt% of one or more multifunctional (meth)acrylate monomers.

Examples of the monomers suitable for the inks of the present invention comprise acrylic monomers, having 2-4 acrylic groups. A non-limiting list of examples of acrylate monomers include 1,2-ethylene glycol diacrylate, 1,4-butandiol diacrylate, 1,6-hexandiol diacrylate, dipropylene glycol diacrylate, neopentylglycol diacrylate, ethoxylated neopentylglycol diacrylates, propoxylated neopentylglycol diacrylates, tripropylene glycol diacrylate, bisphenol-A diacrylate, ethoxylated bisphenol-A-diacrylates, bisphenol-A-diglycidylether diacrylate, ethoxylated bisphenol-A-diacrylates, poly(ethylene)glycol diacrylates, trimethylolpropane triacrylate, trimethylolpropane trimethacrylate, ethoxylated trimethylolpropane triacrylates, propoxylated trimethylolpropane triacrylates, propoxylated glycerol triacrylates, pentaerythritol triacrylate, ethoxylated pentaerythritol triacrylates, propoxylated pentaerythritol tetraacrylates, ethoxylated pentaerythritol tetraacrylates, ditrimethylolpropane tetraacrylate, dipentaerythritol pentaacrylate, dipentaerythritol hexaacrylate ethoxylated dipentaerythritol hexaacrylates or mixtures thereof, preferred are ethoxylated trimethylolpropane triacrylates, ethoxylated pentaerythritol triacrylates and propoxylated pentaerythritol tetraacrylates, and combinations thereof.

The radiation-curable hybrid ink and coating compositions of the present invention may further comprise one or more monofunctional (meth)acrylate monomers. When present, the one or more monofunctional acrylate monomers are typically present in an amount of up to 5wt%, such as 1 wt% to 5 wt%, preferably up to 4wt%, and more preferably up to 3 wt%, based on the total weight of the ink or coating composition.

(Meth)acrylate monomers for use in the invention include monomers derived from vegetable oils, such as soybean acrylate, and fatty acids. However, the use of such monomers is preferably limited. For example, the inks or coatings of the invention may comprise less than 10wt% of vegetable oil (meth)acrylates, preferably less than 5wt% vegetable oil (meth)acrylates, and even more preferably be substantially free of vegetable oil (meth)acrylates.

For example, the one or more monofunctional monomers may be present in an amount of 1 wt% to 3 wt%; or 1 wt% to 2 wt%; or 2 wt% to 5 wt%; or 2 wt% to 3 wt%; or 3 wt% to 5 wt%.

Suitable monofunctional acrylate monomers include, but are not limited to, tertiobutyl cyclohexanol acrylate, 2-(2-ethoxyethoxy)ethyl acrylate, tetrahydrofurfuryl acrylate, lauryl acrylate, 2-phenoxyethyl acrylate, isodecyl acrylate, ethoxylated phenyl acrylate, 3,3,5-trimethyl cyclohexanol acrylate, iso-octyl acrylate, octyl decyl acrylate, polycaprolactone acrylate, ethoxylated nonphenyl acrylate, isobornyl acrylate, cyclic trimethylolpropane formal acrylate, stearyl acrylate, behenyl acrylate, alkoxylated lauryl acrylate, combinations thereof, and the like. Preferred is lauryl acrylate.

### Vegetable Oils and Vegetable Oil Esters

The radiation-curable hybrid ink and coating compositions of the invention may further comprise one or more vegetable oils and vegetable oil esters. When present, the one or more vegetable oils and vegetable oil esters may be present in an amount of 0.1 wt% to 35 wt%, based on the total weight of the ink or coating composition. Preferably, the one or more vegetable oils and vegetable oil esters are present in an amount of 10 wt% to 30 wt%, and even more preferably in an amount of 15 wt% to 25 wt%.

The one or more vegetable oils and vegetable oil esters may preferably be present in an amount of 0.1 wt% to 20 wt%; or 0.1 wt% to 15 wt%; or 0.1 wt% to 10 wt%; or 0.1 wt% to 5 wt%; or 0.1 wt% to 1 wt%; or 0.1 wt% to 0.5 wt%; or 0.5 wt% to 25 wt%; or 0.5 wt% to 20 wt%; or 0.5 wt% to 15 wt%; or 0.5 wt% to 10 wt%; or 0.5 wt% to 5 wt%; or 0.5 wt% to 1 wt%; or 1 wt% to 25 wt%; or 1 wt% to 20 wt%; or 1 wt% to 15 wt%; or 1 wt% to 10 wt%; or 1 wt% to 5 wt%; or 5 wt% to 25 wt%; or 5 wt% to 20 wt%; or 5 wt% to 15 wt%; or 5 wt% to 10 wt%.

The vegetable oils can be one or more drying oils, semi-drying oils and non-drying oils. Examples include almond oil, cacao oil, candlenut oil, castor oil, dehydrated castor oil, coconut oil, corn oil, cottonseed oil, grape seed oil, hempseed oil, linseed oil, olive oil, palm kernel oil, peanut oil, rapeseed oil, rice bran oil, safflower oil, sunflower oil, sesame oil, soybean oil, tall oil, tung oil and walnut oil, including combinations and fatty acid esters, such as fatty acid alkyl esters thereof.

Alternatively, the oil can be one or more fatty acid alkylester, as for example rapeseed methylester, rapeseed isopropylester, caprylic acid methylester, capric acid isoproplyester, laurylic acid methylester, myristic acid methylester, palmitic acid methylester, stearic acid methylester, oleic acid ethylester, erucic acid methylester, ricinoleic acid methyl ester, linoleic acid ethyl ester, linolenic acid methyl ester or palmitic acid isopropylester.

### Alkyd resin

The radiation-curable hybrid ink or coating compositions of the invention may further comprise one or more alkyd resins. When present, the one or more alkyd resins may be present in an amount of 1 wt% to 15 wt%, based on the total weight of the ink or coating composition. The one or more alkyd resins are preferably present in an amount of 1 wt% to 12 wt%; such as 2 wt% to 10 wt%; and more preferably in an amount of 3 wt% to 8 wt%; and even more preferably 5 to 8 wt%.

The one or more alkyd resins may also be present in an amount of 1 wt% to 5 wt%; or 1 wt% to 3 wt%; or 1 wt% to 2 wt%; or 2 wt% to 15 wt%; or 2 wt% to 12 wt%; or 2 wt% to 10 wt%; or 2 wt% to 8 wt%; or 2 wt% to 5 wt%; or 2 wt% to 3 wt%; or 3 wt% to 15 wt%; or 3 wt% to 12 wt%; or 3 wt% to 10 wt%; or 3 wt% to 8 wt%; or 3 wt% to 5 wt%; or 5 wt% to 15 wt%; or 5 wt% to 12 wt%; or 5 wt% to 10 wt%; or 5 wt% to 8 wt%.

Alkyds are polyesters modified by the addition of vegeteable oil, fatty acids and other components and therefore are partly derived from, vegetable oil (or as used herein are "vegetable alkyds"). In the ink of the present invention, alkyds typically have number average molecular weights of 1,000 to 20,000 Da.

The alkyds for use in the invention may be the reaction product between a polyhydric alcohol and an acid or acid anhydride. The alkyd for use in the invention may be a vegetable alkyd. The alkyds for use in the invention may be modified with fatty acids, either saturated or unsaturated, from plant and vegetable oils. Non-limiting examples of such acids include sebatic acid, lauric acid, stearic acid, myristic acid, palmitic acid, oleic acid, linoleic acid, arachidic acid, behenic acid, erucic acid, linolic acid, linoelaidic acid, eleostearic acid, timnodonic acid, arachidonic acid, clupanodonic acid, ricinolic acid, ricinelaidic acid, versatic acid, citric acid, oxalic acid, malonic acid, succinic acid, glutaric acid, maleic acid, fumaric acid, phthalic acid, isophthalic acid, terephthalic acid, trimellitic acid, combinations thereof, and the like.

The alkyds for use in the invention may be produced with vegetable oil which has been transesterified through the addition of a polyol. The polyol may be glycerol. The vegetable oil may be tall oil. The alkyds for use in the invention may include soya oil, sunflower oil, rapeseed oil, corn oil, tung oil, linseed oil, coconut oil and palm oil. The alkyd for use in the invention may be any combination of those alkyds mentioned above.

The lithographic radiation-curable hybrid ink or coating compositions of the present invention preferably comprise vegetable oils, vegetable oil esters, and vegetable alkyd resins in an amount between 0.1 and 30 wt% and more preferably in an amount between 10 and 25wt%.

### Colorants

The radiation-curable hybrid ink and coating compositions of the present invention may further comprise one or more colorants in the form of a pigment. When present, the one or more colorants are present in an amount of 1 wt% to 20 wt%, based on the total weight of the ink or coating composition, and preferably between 5 wt% and 18wt%, and more preferably between 10 wt% and 15wt%.

For example, the one or more colorants may be present in an amount of 1 wt% to 15 wt%; or 1 wt% to 10 wt%; or 1 wt% to 5 wt%; or 1 wt% to 3 wt%; or 1 wt% to 2 wt%; or 2 wt% to 20 wt%; or 2 wt% to 15 wt%; or 2 wt% to 10 wt%; or 2 wt% to 5 wt%; or 2 wt% to 3 wt%; or 5 wt% to 20 wt%; or 5 wt% to 15 wt%; or 5 wt% to 10 wt%; or 10 wt% to 20 wt%; or 10 wt% to 15 wt%; or 15 wt% to 20 wt%.

Pigments suitable for use in the present invention include conventional organic or inorganic pigments. Representative pigments include, but are not limited to, Pigment Yellow 1, Pigment Yellow 3, Pigment Yellow 12, Pigment Yellow 13, Pigment Yellow 14, Pigment Yellow 17, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 111, Pigment Yellow 114, Pigment Yellow 121, Pigment Yellow 126, Pigment Yellow 127, Pigment Yellow 136, Pigment Yellow 138, Pigment Yellow 139, Pigment Yellow 174, Pigment Yellow 176, Pigment Yellow 188, Pigment Yellow 194, Pigment Orange 5, Pigment Orange 13, Pigment Orange 16, Pigment Orange 34, Pigment Orange 36, Pigment Orange 43, Pigment Orange 61, Pigment Orange 62, Pigment Orange 64, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 48: 2, Pigment Red 53: 1, Pigment Red 57: 1, Pigment Red 81: 1, Pigment Red 112, Pigment Red 122, Pigment Red 170, Pigment Red 184, Pigment Red 210, Pigment Red 238, Pigment Red 266, Pigment Blue 15, Pigment Blue 15: 1, Pigment Blue 15: 2, Pigment Blue 15: 3, Pigment Blue 15: 4, Pigment Blue 61, Pigment Green 7, Pigment Green 36, Pigment Violet 1, Pigment Violet 19, Pigment Violet 23, Pigment Black 7, combinations thereof, and the like.

### Photoinitiators

The radiation-curable hybrid ink and coating compositions of the present invention may further comprise, if cured by UV-light, one or more photoinitiators. When present, the one or more photoinitiators may be incorporated in an amount of between 0.1 wt% to 20 wt%, based on the total weight of the ink or coating composition. For example, the one or more photoinitiators are preferably present in an amount of 0.1 wt% to 15 wt%; such as 0.5 wt% to 15 wt%; or more preferably 1 wt% to 10 wt%; such as even more preferably 4 to 8wt%.

The photoinitors may also be present in an amount of or 0.1 wt% to 3 wt%; or 0.1 wt% to 1 wt%; or 0.1 wt% to 0.5 wt%; or 0.5 wt% to 20 wt%; or 0.5 wt% to 15 wt%; or 0.5 wt% to 10 wt%; or 0.5 wt% to 5 wt%; or 0.5 wt% to 1 wt%; or 1 wt% to 20 wt%; or 1 wt% to 15 wt%; or 1 wt% to 10 wt%; or 1 wt% to 5 wt%; such as 1 wt% to 3 wt%; or 1 wt% to 2 wt%.

Examples of suitable photoinitiators include, but are not limited to, benzophenones, benzilketales, dialkoxy acetophenones, hydroxyalkyl-acetophenones, aminoalkylphenones, acylphosphinoxides and thioxanthones, for example benzophenone, methylbenzophenone, 4-phenylbenzophenone, 4,4'-bis(dimethylamino)-benzophenone, 4,4'-bis(diethylamino)-benzophenone, 2,2-dimethoxy-2-phenylacetophenone, dimethoxyacetophenone, diethoxyacetophenone, 2-hydroxy-2-methyl-1-phenylpropan-1-one, 2-benzyl-2-dimethylamino-1-(4-morpholinophenyl)-butan-1-one, 2-methyl-1-[4(methoxythio)-phenyl]-2-morpholinopropan-2-one, diphenylacylphenyl phosphinoxide, diphenyl(2,4,6-trimethylbenzoyl) phosphinoxide, 2,4,6-trimethylbenzoylethoxyphenyl phosphinoxide, 2-isopropylthioxanthone, 4-isopropylthioxanthone, 2,4-dimethylthioxanthone or mixtures thereof. In the case of EB-curable inks, photoinitiators are not required.

Preferred photoinitiators include the Type II photoinitiators thioxanthones such as 2-isopropyl thioxanthone and 2,4-diethylthioxanthone, the Type II photoinitiator 2-dimethylamino-2-(4-methyl-benzyl)-1-(4-morpholin-4-yl-phenyl)-butan-1-one, and the Type I photoinitiators based on phosphinates, such as ethyl(2,4,6-trimethylbenzoyl)-phenylphosphinate.

For an ink designed for food packaging, migrating low molecular weight monomeric photoinitiators can be minimized, or completely replaced by oligomeric or polymeric photoinitiators. Suitable photoinitiators are, for example, photoinitiators containing oligomeric benzophenone derivatives such as for example Omnipol BP from IGM resins, oligomeric amines such as for example Genopol AB-1 from Rahn Group or oligomeric type-I-photo initiators such as Omnipol 910 from IGM company.

### Other optional additives

In order to avoid premature polymerization of the double-bonds in the oils and alkyd resin, an antioxidant can be added. Exemplary anti-oxidants include ascorbic acid, astaxanthin, carotene, chroman (3,4-dihydro-2H-1-benzopyran), hexamethylene bis(3,5-di-tert-butyl-4-hydroxyhydro-cinnamate), octadecyl 3,5-di-tert-butyl-4-hydroxyhydro-cinnamate, vitamin E and vitamin E analogs, mono-tert-butylhydroquinone (MTBHQ) and butylated hydroxy toluene (BHT). Preferred anti-oxidants are MTBHQ and BHT. When present, antioxidants are typically present in an amount of 0.1 wt% to 4 wt%, based on the total weight of the ink or coating composition. For example, the one or more antioxidants may be present in an amount of 0.1 wt% to 3 wt%; preferably 0.1 wt% to 2 wt%; or more preferably 0.1 wt% to 1.1 wt%.

The antioxidant may also be present in amount such as 0.1 wt% to 0.5 wt%; or 0.5 wt% to 4 wt%; or 0.5 wt% to 3 wt%; or 0.5 wt% to 2 wt%; or 0.5 wt% to 1 wt%; or 1 wt% to 4 wt%; or 1 wt% to 3 wt%; or 1 wt% to 2 wt%; or 2 wt% to 4 wt%; or 2 wt% to 3 wt%; or 3 wt% to 4 wt%.

In order to accelerate the drying of oils and alkyds, the ink may contain one or more dryers, which are typically fatty acid salts, such as heavy metal salts (e.g. manganese) of organic carboxylic acids. Examples of these heavy metal salts of organic carboxylic acids include, but are not limited to, manganese linoleate, hexadecanoate or octoate (e.g., see U.S. Pat. Nos. 5,156,674; 6,899,756; 7,811,367). The dryer can be any of the commercially available metal dryers. When present, the one or more dryers are typically present in an amount of 0.1 wt% to 3 wt%, based on the total weight of the ink or coating composition. For example, the one or more dryers may be present in an amount of 0.1 wt% to 2 wt%; or 0.1 wt% to 1 wt%; or 0.1 wt% to 0.5 wt%; or 0.5 wt% to 3 wt%; or 0.5 wt% to 2 wt%; or 0.5 wt% to 1 wt%; or 1 wt% to 3 wt%; or 1 wt% to 2 wt%; or 2 wt% to 3 wt%.

The hybrid inks and coatings of the present invention may further contain the usual additives to modify flow, surface tension, gloss, pigment wetting and abrasion resistance of the cured coating or printed ink. Such additives contained in inks or coatings typically are surface-active agents, waxes, shelf-life stabilizers, etc. and combinations thereof. These additives may function as leveling agents, shelf-life stabilizers, wetting agents, slip agents, flow agents & dispersants. Preferred additives include fluorocarbon surfactants, silicones and organic polymer surfactants. Examples include the Tegorad product lines (Tegorad are trademarks and are commercially available products of Tego Chemie, Essen, Germany) and the Solsperse product lines (Solsperse are trademarks and are commercially available products of Lubrizol Company). When present, these one or more additives are generally present in an amount of 0.1 wt% to 4 wt%, based on the total weight of the ink or coating composition. For example, the one or more antioxidants may be present in an amount of 0.1 wt% to 3 wt%; or 0.1 wt% to 2 wt%; or 0.1 wt% to 1 wt%; or 0.1 wt% to 0.5 wt%; or 0.5 wt% to 4 wt%; or 0.5 wt% to 3 wt%; or 0.5 wt% to 2 wt%; or 0.5 wt% to 1 wt%; or 1 wt% to 4 wt%; or 1 wt% to 3 wt%; or 1 wt% to 2 wt%; or 2 wt% to 4 wt%; or 2 wt% to 3 wt%; or 3 wt% to 4 wt%.

The hybrid inks and coatings of the present invention synthetic may comprise between 1 and 15wt% of one or more biobased waxes. The hybrid inks and coatings of the present invention synthetic preferably comprise between 2 and 10 wt% of one or more biobased waxes. Biosourced waxes for use in the invention include those based on carnauba, sugar cane, polylactic acid, rice bran, hydrogenated castor oil, and poly-(hydroxybutyrate-co-hydroxyvalerate) PHVB.

The radiation-curable hybrid ink of the present invention may further contain the usual extenders such as clay, talc, calcium carbonate, magnesium carbonate or silica to adjust water pickup, misting and color strength. When present, the one or more extenders or fillers are typically present in an amount of 1 wt% to 10 wt%, based on the total weight of the ink or coating composition. For example, the one or more extenders or fillers may be present in an amount of 1 wt% to 8 wt%; or 1 wt% to 5 wt%; 1 wt% to 4.5 wt%; or 1 wt% to 4 wt%; or 1 wt% to 3.5 wt%; or 1 wt% to 3 wt%; or 1 wt% to 2.5 wt%; or 1 wt% to 2 wt%; or 1 wt% to 1.5 wt%; or 2 wt% to 10 wt%; or 2 wt% to 8 wt%; or 2 wt% to 5 wt%; or 2 wt% to 4.5 wt%; or 2 wt% to 4 wt%; or 2 wt% to 3.5 wt%; or 2 wt% to 3 wt%; or 2 wt% to 2.5 wt%; or 3 wt% to 10 wt%; or 3 wt% to 8 wt%; or 3 wt% to 5 wt%; or 3 wt% to 4.5 wt%; or 3 wt% to 4 wt%; or 3 wt% to 3.5 wt%; or 4 wt% to 10 wt%; or 4 wt% to 8 wt%; or 4 wt% to 5 wt%.

The hybrid inks and coatings of the present invention synthetic preferably comprise less than 5wt% of synthetic waxes, such as PE or PTFE wax. The hybrid inks and coatings of the present invention synthetic are more preferably substantially free of synthetic waxes, such as PE or PTFE wax.

### Printed Articles

The present invention also provides a printed article comprising the lithographic radiation curable hybrid ink or coating composition of the invention and a substrate. Examples of such articles include, but are not limited to, those comprising substrates selected from paper, plastic, plastic or polymer film, glass, ceramic, metal, composites, and the like. The articles also include products of manufacture, such as publications (e.g. brochures), labels, and packaging materials (e.g. cardboard sheet or corrugated board), containers (e.g. bottles, cans), a polyolefin (e.g. polyethylene or polypropylene), a polyester (e.g. polyethylene terephthalate), a metalized foil (e.g. laminated aluminum foil), metalized polyester, a metal container, and the like.

The substrate to be printed on may be composed of any typical substrate material such as paper and carton board. The substrate may be paper print stock typically used for publications or may be a packaging material in the form of a cardboard sheet or corrugated board.

### Curing the hybrid inks and coatings of the invention

The radiation-curable inks and coatings of the present invention can be cured by an actinic light source, such as for example UV-light, provided by a high-voltage mercury bulb, a medium-voltage mercury bulb, a xenon bulb, a carbon arc lamp, a metal halide bulb, a UV-LED lamp or sunlight. The wavelength of the applied irradiation is preferably within a range of 200 to 500 nm, more preferably 250 to 350 nm. UV energy is preferably within a range of 30 to 3,000 mJ/cm², and more preferably within a range of 50 to 500 mJ/cm². In addition, the bulb can be appropriately selected according to the absorption spectrum of the radiation-curable composition.

Alternatively, actinic radiation may also include electron beam radiation (EB). Commercially, EB-dryers are available for example from Energy Science, Inc. of Wilmington, Mass, or from Advanced Electron Beams Inc. (AEB) of Wilmington, Mass. The energy absorbed, also known as the dose, is measured in units of kilo-Grays (kGy), one kGy being equal to 1,000 Joules per kilogram. Typically, the electron beam dose should be within the range of 10 kGy to 40 kGy for complete curing. With the radiation-curable composition of the present invention, preferably curing with a radiation dose of 20-30 kGy at an oxygen level of < 200 ppm is usually sufficient to get a dry, solvent resistant ink.

Optionally, an infrared or thermal dryer on press can be used to accelerate the setting of the oil components.

### Preparation of radiation-curable hybrid inks and coatings

The ink can be made by typical procedures known in the art, usually by dry-grinding or using a flush, color concentrate, or base. In a typical dry-grind manufacturing procedure for inks, the required amount of dry pigment is mixed with conventional oils, alkyd resin, inert hard resins solubilized in vegetable oils in a dissolver or mixer for 15-30 minutes to wet out all pigment. The pre-mix is then ground on a three roll mill (or other grinding mill) at a pressure of 1-4 MPa and a temperature of 20-40°C until the desired grind specifications are met. Photoinitiators can be added before or after grinding in the form of a solution or paste.

The pigment may be introduced as a flush. In the "flushing process" the wet pigment press cake is "flushed" in high shear grinding equipment like, for example, a sigma blade mixer. Oil, varnish, alkyd and/or other non-aqueous hydrophobic vehicles are added, and the pigment will eventually flush into the organic phase and leave the water phase clear of pigment. A substantial part of the water can then be poured off. In order to remove the remaining water, usually heat and vacuum is applied. The resulting product is called a "flush paste" or pigment concentrate (base). Then, the pigment concentrate is diluted with acrylate monomer, oligomer, optional photoinitiator and solution of inert hard resin (varnish).

This is preferred from the viewpoint of versatility. A color concentrate which is used for a cold-set ink, a heat-set ink or a sheet-fed ink, is highly appreciated by a formulator provided that he could use it also in a UV-hybrid ink.

### EXAMPLES

The following examples illustrate specific aspects of the present invention and are not intended to limit the scope thereof in any respect and should not be so construed.

### Measurement Methods

### Molecular Weight:

The molecular weight of non-polymeric or oligomeric compounds (e.g. monomers) is defined and calculated by the molecular structure of the compound. Usually, this is given by the supplier technical data sheet of the monomer or can be found on the webpage of the European Chemical Agency (ECHA).

The molecular weight of oligomeric and polymeric species is measured by Gel Permeation Chromatography (GPC) conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as the mobile phase. The column temperature is 40 °C. The molecular weight is calculated by comparison with a polystyrene standard. The skilled person will appreciate that this definition of molecular weight applies to polymeric materials which typically have a molecular weight distribution. Unless otherwise stated, the molecular weight reported herein for oligomers and polymers is the number average molecular weight.

### Biobased/Biorenewable Content

The biobased/biorenewable carbon content (BRC) is determined using the standard method described in ASTM D6866 ("Standard Test Methods for Determining the Biobased Content of Natural Range Materials Using Radiocarbon and Isotope Ratio Mass Spectrometry Analysis"), Method B. See "Understanding biobased carbon content," Society of the Plastics Industry Bioplastics Council (February 2012). The application of ASTM D6866 to measure "biobased content" is based on the same concepts as radiocarbon dating, but without using the age equations. The ratio of the amount of radiocarbon (14C) in an unknown sample to that of a modem reference standard is determined. Fossil carbon contains no radiocarbon. The greater the amount of "new" carbon, the higher 14C. The ratio is reported as a percentage of the total carbon that is modem carbon, with the units "pMC" (percent modem carbon), or BRC (as a percentage). Some suppliers may assess a percentage of biobased content based on weight, based on the "recipe" the producer uses (i.e. how much of a natural material, such as cellulose, is present in a varnish containing cellulose and copolyester). However, it should be noted that the weight percent includes not just the contribution to the weight from the carbon, but also from the other elements in the materials.

For the purposes of the present invention, the BRC content refers to the BRC as assessed using ASTM D6866, Method B.

### Carcinogenic, mutagenic, or reprotoxic (CMR) compounds

CMR compounds are classified according to the EU Classification, Labelling and Packaging of substances (CLP) Regulation 1272/2008. CMR compounds are those falling under categories 1A, 1B, and 2 of this EU classification.

*Phenolic Modified Rosin Resin* may be made from the esterification of glycerol (or pentaerythritol) with the polycondensate of rosin, phenol (or bisphenol A) and formaldehyde.

### Viscosity

Viscosity was determined with a MCR301 cone and plate rheometer from Anton Paar GmbH at a shear rate of D = 2-50 1/s at 23 °C. The viscosity value at D = 50 1/s was recorded (Pa.s) and yield value at D = 2 1/s.

### Tack

Inkometer tack was measured with a calibrated "Inkometer" instrument from Thwing Albert. 1.30cm³ of ink was placed on the EPDM rubber distribution roller at 32.2°C, distributed for 15 seconds at a roller speed of 150 rpm, then 60 seconds at 800 rpm.

The integrated tack (iTack) was also measured with a Alphatack from Novomatics using 100µL sample at 30°C and 800 rpm. The measured value (iTack value) is read after 60s.

### Flow

The flow was measured with a vertically arranged aluminum plate at 90° on which 1 ml of ink was placed. The distance in cm that the ink ran down the plate after 15 minutes was recorded.

### Misting

Misting was assessed in two ways. Misting quotation is determined by visual assessment against a internal scale made with real example. Firstly, a visual assessment (visual cotation) is used and a value of between 0 (perfect), 1 (very good), 2 (good), 3 (acceptable), 4 (poor), and 5 (very poor) is obtained. A result of less than 3 is considered acceptable. Secondly, an "Inkometer" from Thwing Albert is used, using 3.5g of ink placed on the EPDM rubber distribution roller at 32°C, distributed for 15 seconds at a roller speed of 150 rpm, then 5 minutes at 2000 rpm. A blank paper sheet is placed behind the rollers during the test. The inkometer measures the optical density (OD) of the ink on the paper sheet.

### Gloss

Gloss was measured using a Micro Gloss Instrument from BYK-Gardner, set at an angle of 60 degrees. Gloss is reported as gloss units.

### Assessment of Cure

The cure of a print was assessed by how much ink from a cured print was transferred (set-off) to another piece of paper under high pressure. This simulates the condition in a large paper stack or substrate roll where the freshly cured prints are stored under pressure.

Ideally, no ink is transferred. Usually, the transfer of an experimental ink to the test paper is compared relative to the transfer of a control UV ink to the test paper, wherein the control ink is intended for the same application The amount of set-off ink at a defined UV-dose is a measure for the reactivity and achievable cure speed (productivity).

The cure of the ink is assessed by the set-off test, employed by the following method: the ink was applied onto a surface of a cardboard substrate with a print proofer in an appropriate optical density (OD). OD is measured by a densitometer. Suitable printed optical densities for lithographic inks are 0.9 -1.5 (yellow), 1.0-1.65 (cyan), 1.0-1.5 (magenta), and 1.1-1.9 (black), depending on the substrate. Directly after UV-cure with a 200 Watt Fusion H-bulb at a line speed of 400 feet/min, delivering a UV-dose of 33 mJ/cm², the reverse surface of a paper board substrate (Invercote G - 3 x 3 cm²) was applied on the cured ink sample. Both were introduced on a press and a pressure of 1000 bars (10 tonnes (1000 Kg) per cm²) was applied. The print was released as soon as the pressure was reached (1-second pressure time). The set off material (transferred ink) on the board substrate was measured with a Techkon Densitometer and compared to a control ink.

By comparing to a control ink, under the same curing conditions and printed density, the ink with a lower number on the densitometer indicates better cure. A densitometer reading lower than 0.50 is usually considered a good value.

### Ink grinding test

Fineness of ink grind is an important parameter that describes the quality of dispersion of solid pigment particles in the ink. A grindometer was used to test the fineness of the pigment particles. The grindometer consists of a steel block with a channel of varying depth machined into it, starting at a convenient depth for the type of ink to be measured, and becoming shallower until it ends flush with the block's surface. The depth of the groove is marked off on a graduated scale next to it. The ink to be tested was poured into the deep end of the groove and scraped towards the shallow end with a flat metal scraper. At the point of 4 µm on the graduated scale, the ink track was inspected for the number of large irregularities (first number in bracket), and the number of small irregularities (second number in bracket). A score of (0/0) means that there are neither large particles nor small irregularities observed, and the ink is rated as having passed.

All inks according to the invention have acceptable ink grinding properties, with particle size below 15 µm.

### Stability

Stability was tested using two methods.

The first method utilizes a Turbiscan Static Multiple Light Scattering (SMLS) analyser to detect particle migration and size variation. The analyser uses an oven set to 50 °C into which samples of the same concentration are placed. Two synchoronous detectors were used to analyse both the backscattering (BS) and Transmission (T) signals of laser light incident on the samples, with scans made over the entire length of the sample and measurements taken periodically over a period of time up to 9 days, 20 hours. Variation in the Backscattering (ΔBS(%)) over time is indicative of instability in the ink, with greater variation corresponding to greater instability (due to the particles settling). The Turbiscan Stability Index (TSI) is determined from the sum of the T and BS variations over the whole height of the sample and is plotted as a function of time. Lower TSI indicates increased stability of the sample.

The second method utilizes Rheolaser Technology based on Multi Speckle Diffusing Wave Spectroscopy (MS-DWS) to analyse the rheological properties of samples without mechanical stress (by passive microrheology). The backscattering (BS) of laser light is measured for samples of the same concentration, during six cycles of temperature. The same temperature ramp rate is employed in each of the six cycles making up one experiment. The response is measured in MicroDynamics (mD) in Hz. Three different temperature ramp rates are employed: a) 10 to 50 °C at 10°C/min, b) 10 to 50 °C at 5°C/min, c) 10 to 40 °C at 10°C/min. The Speckle Image obtained is analysed mathematically to obtain a characteristic time as a function of time. The characteristic time is inversed to obtain the mD and the results plotted as a function of time. Consistent mD response over multiple cycles indicates stability. In contrast, increasing or decreasing mD response with increasing number of cyles indicates a lack of stability.

### Examples 1 and 2. Cyan hybrid inks containing 16 to 22% inert hard resin

Inventive cyan hybrid inks were made from dry grind on a three rolls mill, 3 passes at 2 MPa (25°C), having the composition shown in Table 1 (between 16% - 22 % inert hard resin).

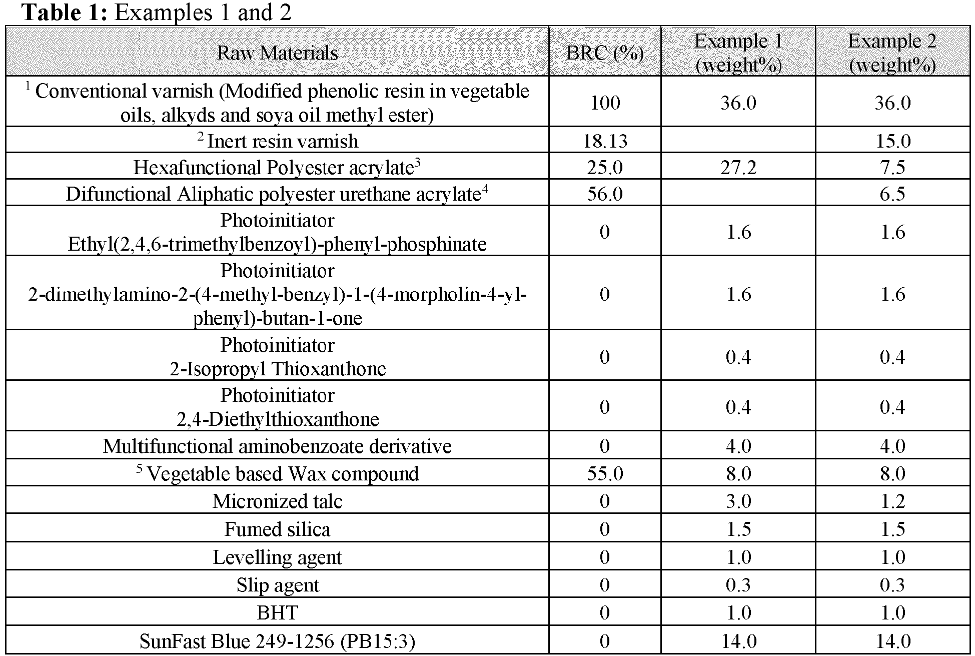

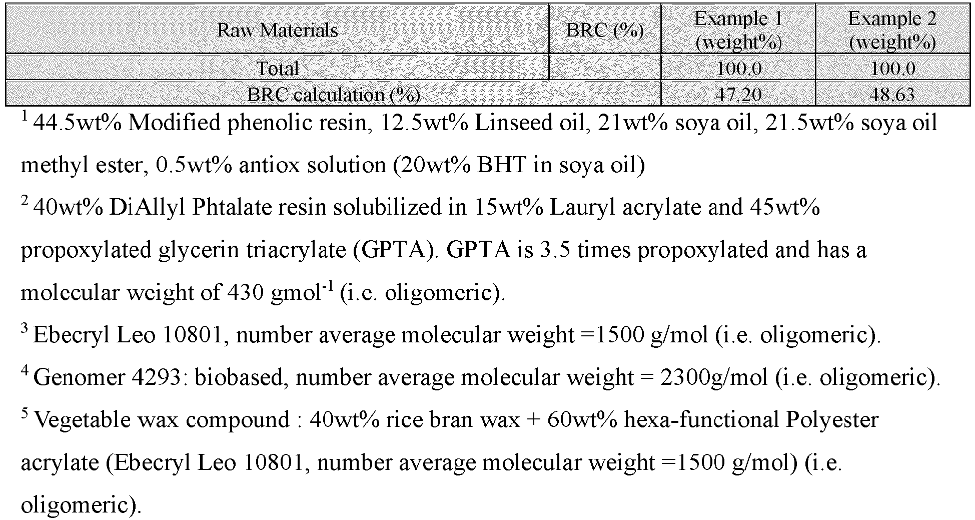

The properties of Example 1 and 2 inks were tested as described above. The results are shown in Table 1A.

**Table 1A. Properties of Examples 1 and 2**

| | Example 1 | Example 2 |
|---|---|---|
| Viscosity [Pa*s] @50s-1 | 31.1 | 36.7 |
| Yield [Pa*s] @2s-1 | 67.8 | 80.8 |
| Inkometer tack [g.m] | 15.6 | 23.2 |
| iTack (Lithotack) (N/m) | 255.7 | 381.1 |
| Flow after 15 min. [cm] | 2.2 | 1.8 |
| Set-off UV-curing test curing @ ¹OD 1.45 | 0.02 | 0.10 |
| Misting (visual cotation / measured OD) | (5/0.23) | (4/0.20) |

| | | |
|---|---|---|
| ¹Optical density of printed ink on printed substrate. | | |

The Example 1 and 2 inks, as shown in Table 1A, exhibit typical values of viscosity (20-60 Pas), flow (1.5-7 cm) and tack (10-40 units inkometer and 200-500 units Lithotack) of a UV lithographic ink.

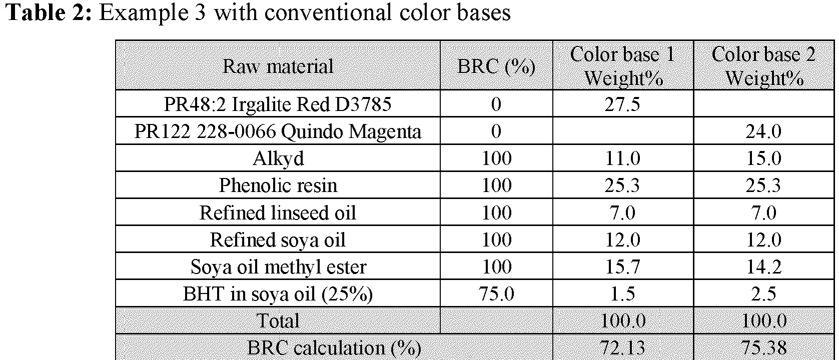

Next, the magenta color base was passed over a three roll mill, 1 pass at 2 MPa (25°C).

Table 3 below shows the composition of the finished ink (13% inert hard resin, 6.2% alkyd and 18% oil and ester components):

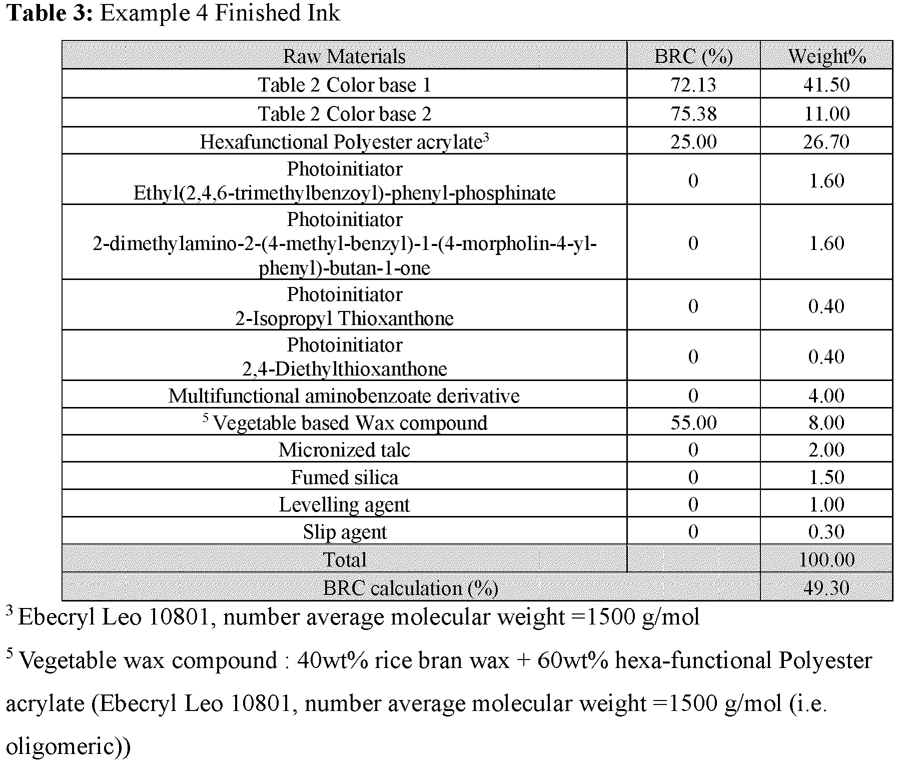

The properties of Example 4 were tested as described above. The results are shown in Table 3A.

**Table 3A. Properties of Example 4**

| | **Example 4** |
|---|---|
| Viscosity [Pa*s] @50s-1 | 64.2 |
| Yield [Pa*s] @2s-1 | 129.3 |
| Inkometer tack [g.m] | 22.3 |
| iTack (Lithotack) (N/m) | 366.2 |
| Flow after 15 min. [cm] | 5.9 |

### Example 5. Hybrid ink made from color base and then UV-over-coated (15% inert hard resin)

A hybrid ink was made from a cyan universal base (color concentrate) which can be used to make sheet-fed inks, heat-set inks and cold-set inks and an acrylate let-down varnish by mixing in a dissolver at 40-45°C for 20 minutes (50% combined inert hard resin & alkyd resin & vegetable oil & mineral oil) and milled on a three-roll mill. The purpose of this experiment is to show that the inks of the present invention are capable of being overprinted with a UV overprint varnish while exhibiting good visual laydown and print properties.

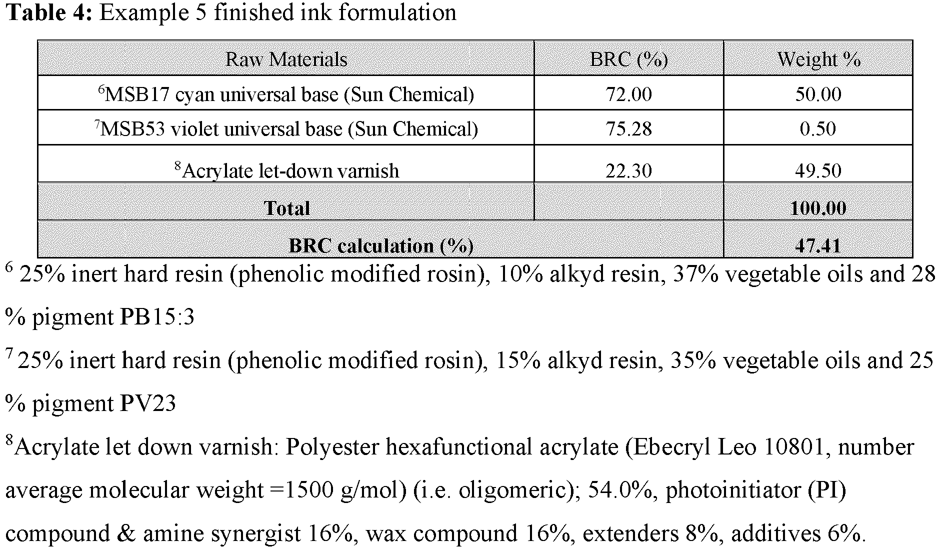

The photoinitiator (PI) compound & amine synergist comprises a mixture of phosphine oxides, α-amino ketones, thioxanthones such as 2,4-diethyl thioxanthone, multifunctional aminobenzoate derivatives, and poly(ethylene glycol) bis(p-dimethylaminobenzoate).

The properties of Example 5 were tested as described above. The results are shown in Table 4A.

**Table 4A. Properties of Example 5**

| | Example 5 |
|---|---|
| Viscosity [Pa*s] @50s-1 | 29.2 |
| Yield [Pa*s] @2s-1 | 65.5 |
| Inkometer tack [g.m] | 15.8 |
| iTack (Lithotack) (N/m) | 259.0 |
| Flow after 15 min. [cm] | 1.9 |

The ink was printed with on a Roland 700 press (combi rollers from Böttcher and hybrid blanket from Trelleborg; 4% Sunfount 480 and 3%IPA fount) at 12500sheets/h on Invercote G substrate at 1.45 OD target.

The ink was immediately overprinted with UV-overprint varnish 44HC150 (Sun Chemical) with an anilox roller @140 lines and end-cured with 150 mJ/cm². Gloss was measured as described above. Gloss back is indicated by a decrease in gloss over time. A decrease of less than 10 gloss units indicates that gloss back is within preferred ranges.

**Table 5: Gloss Back Results**

| | **Gloss Units** |
|---|---|
| Gloss after UV-cure | 31.8 |
| Gloss after 1 day | 32.0 |
| Gloss after 3 days | 32.8 |

Table 5 exhibits that the present hybrid ink is not showing any gloss back.

### Example 6. Cyan hybrid ink made from conventional sheetfed color base and gelled acrylate varnish containing 20% inert resin

A hybrid ink as shown in Table 6 was made from a cyan conventional sheetfed ink color base and gelled acrylate varnish containing 20% inert resin.

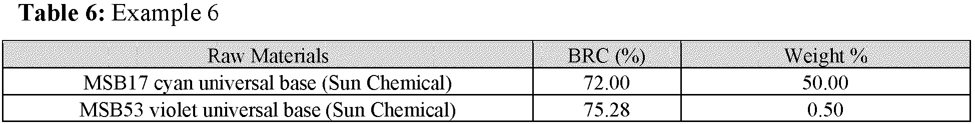

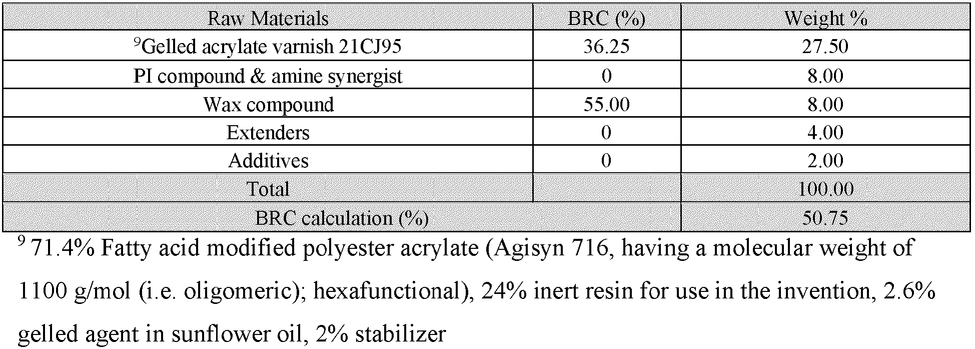

The properties of Example 6 were tested as described above. The results are shown in Table 6A.

**Table 6A. Properties of Example 6**

| | **Example 6** |
|---|---|
| Viscosity [Pa*s] @50s-1 | 58.40 |
| Yield [Pa*s] @2s-1 | 126.2 |
| Inkometer tack [g.m] | 27.5 |
| iTack (Lithotack) (N/m) | 452.0 |
| Flow after 15 min. [cm] | 3.6 |
| Set-off UV-curing test curing @ ¹OD 1.45 | 0.06 |
| Misting (visual cotation / measured OD) | (4.5/0.22) |

### Stability Testing

The ink of Example 1 was tested (referred to herein as Agricure) as well as a comparative ink (Starluxe), which only comprises acrylate monomers and oligomers but is not a hybrid ink and is therefore free of conventional inert resin components.

### Turbiscan

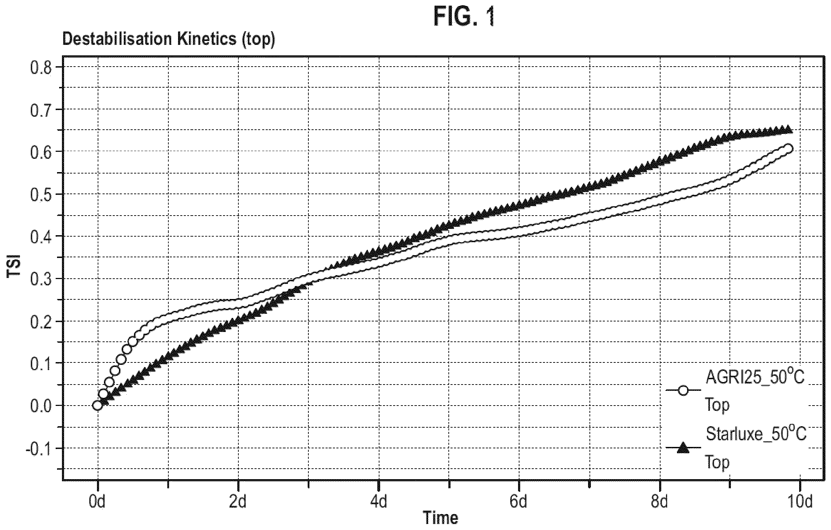

Turbiscan analysis of Example 1 (AgriCure) detected no significant variation in ΔBS(%) for Example 1. In contrast, Turbiscan analysis of Starluxe, which became opaque / clarified over the course of the experiment, detected increased ΔBS(%) variation . Figure 1 depicts the TSI of both Example 1 and Starluxe, showing how Starluxe evolved more over the course of the experiment, having a higher TSI after 3 days.

### RheoLaser

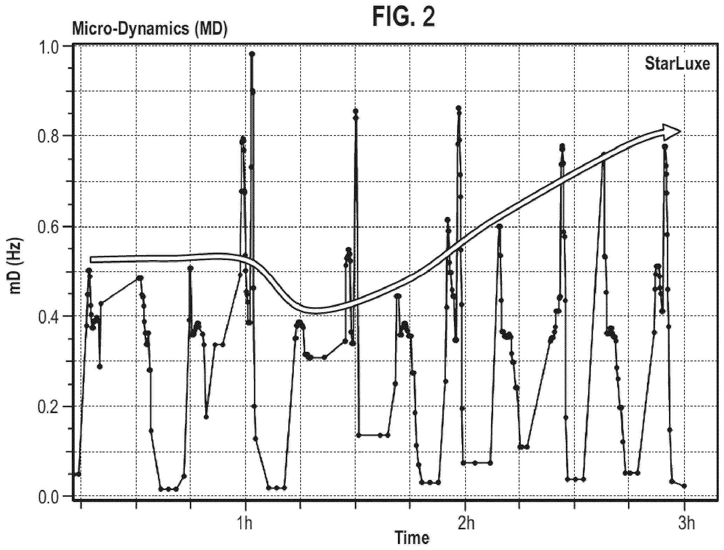

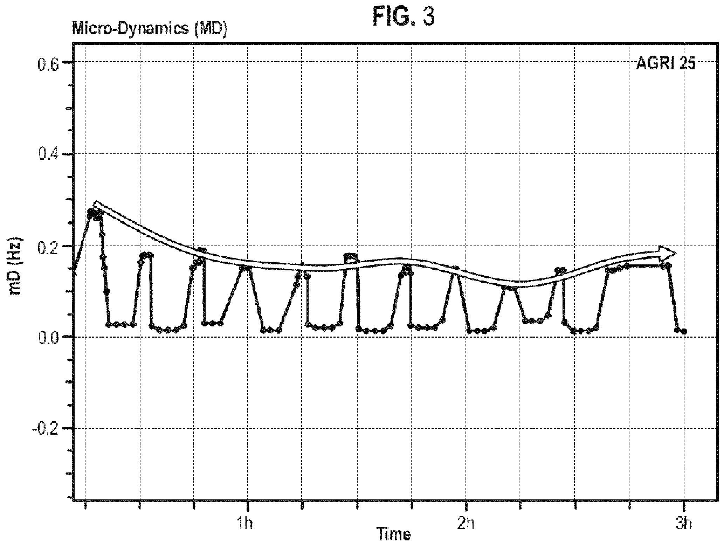

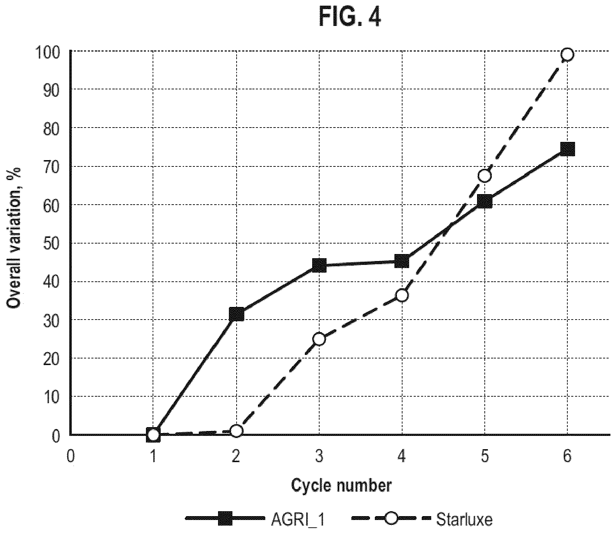

Figure 2 depicts the results of the RheoLaser analysis of Starluxe under the same conditions, which showed considerably greater variation and noise. Noise is typically an indication of exudation (wherein the liquid layer is on top). In contrast, Figure 3 depicts the results of the RheoLaser analysis of Example 1 (Agricure) for six temperature cycles between 10 and 50 °C using a 10 °C/min ramp rate. A small amount of variation in the mD response was detected. Figure 4 depicts the percent overall variation (corresponding to the variation in the percentage of the first peak, normalized with respect to the 1st peak of the first cycle). Variation for Starluxe started slowly but after 4 cycles increased rapidly until after 6 cycles to the percentage overall variation is greater than that for Example 1.

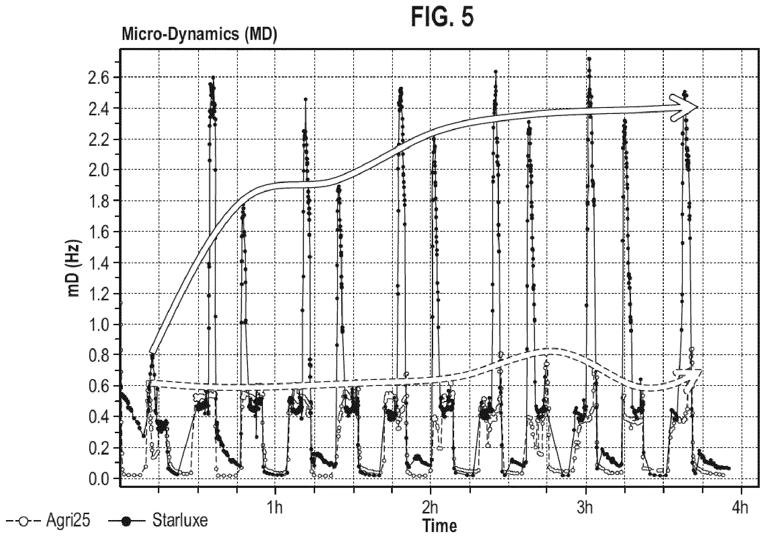

Figure 5 depicts how similar results were obtained when the analysis was repeated between 10 and 50 °C with a 5 °C/min ramp rate.

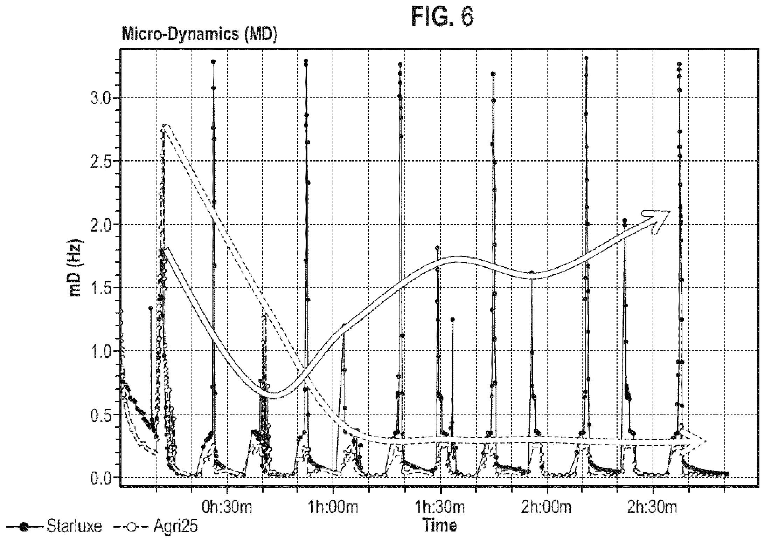

Figure 6 depicts the results obtained when the analysis was repeated between 10 and 40 °C with a 10 °C/min ramp rate. Again considerably greater variation and noise was detected for Starluxe relative to Example 1. In this experiment, some initial variation was observed for Example 1 before the sample stabilized after 1h.

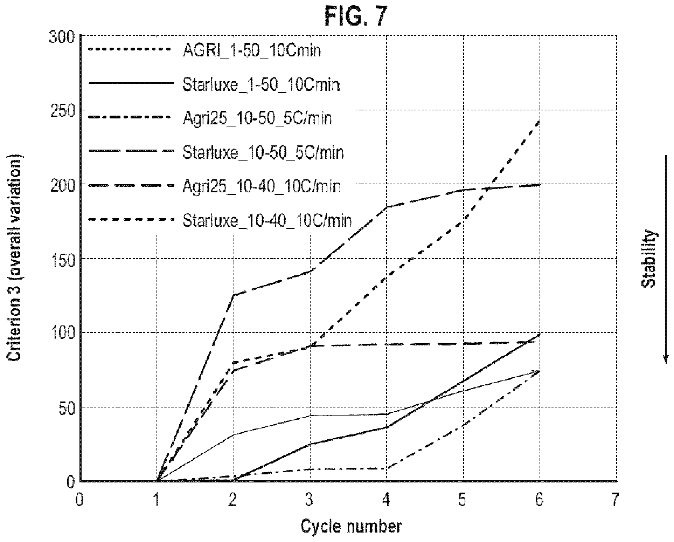

Figure 7 depicts the results for each of the above mentioned RheoLaser experiments, demonstrating that, for each set of experimental conditions, Example 1 had improved stability (after 6 cycles) than Starluxe, when tested under the same conditions, indicating that Example 1 has improved stability relative to Starluxe.

The present invention has been described in detail, including the preferred embodiments thereof. However, it will be appreciated that those skilled in the art, upon consideration of the present disclosure, may make modifications and/or improvements on this invention that fall within the scope of the invention.

## Claims

1. A lithographic radiation curable hybrid ink or coating composition comprising:
a) 10 wt% to 30 wt% one or more inert hard resins selected from the group consisting of rosin resins, rosin resin derivatives, hydrocarbon resins, modified hydrocarbon resins, iso diallyl phthalate resins, non-phthalate allyl resins, and combinations thereof,
b) 10 to 60% non-UV raw material selected from the group consisting of vegetable oils, vegetable oil esters, alkyds resins, antioxidants, and combinations thereof; wherein a non-UV raw material is a compound that is inert and does not react under photoinitiation conditions; and
c) 5 wt% to 45 wt% one or more multifunctional (meth)acrylate monomers and/or oligomers;
d) 0-10% monofunctional (meth)acrylate monomers and/or oligomers;
and wherein the ink or coating composition comprises ≥ 40% biorenewable content, wherein the biorenewable content is measured according to the standard method described in ASTM D6866.

2. The lithographic radiation curable hybrid ink or coating composition of claim 1:
i) comprising less than 5wt% vegetable oil (meth)acrylates; and/or
ii) comprising vegetable oils and vegetable oil esters in an amount of 15 wt% to 35wt%; and/or
iii) wherein the ratio of the amount of vegetable oils, vegetable oil esters, and alkyds to the amount of (meth)acrylate monomers and oligomers is at least 0.5:1.0, such as between 0.5:1.0 and 2.0:1.0; and/or
iv) wherein component b) is selected from the group consisting of vegetable oils, vegetable oil esters, alkyds resins, and combinations thereof; and/or
v) wherein the ink or coating composition comprises ≥ 45% biorenewable content.

3. The lithographic radiation curable hybrid ink or coating composition of any preceding claim, comprising less than 20wt% of compounds classified as carcinogenic, mutagenic, or reprotoxic (CMR), preferably less than 10wt%, or more preferably less than 5 wt%; optionally wherein the composition is substantially free of compounds classified as carcinogenic, mutagenic, or reprotoxic (CMR); optionally wherein the CMR compounds are selected from the group consisting of trimethylolpropane triacrylate, silicone diacrylates, 2-dimethylamino-2-(4-methyl-benzyl)-1-(4-morpholin-4-yl-phenyl)-butan-1-one, and combinations thereof; optionally the CMR compound is trimethylolpropane triacrylate.

4. The lithographic radiation curable hybrid ink or coating composition of any preceding claim:
i) wherein the one or more inert hard resins of part a) are present in an amount of 10 wt% to 25, such as 10 to 20 wt%; and/or
ii) wherein the inert hard resins of part a) are selected from the group consisting of iso diallyl phthalate resin, non-phthalate allyl resins, rosin resin derivatives, and combinations thereof; optionally wherein the rosin resin derivative is a phenolic rosin resin; and/or
iii) wherein the one or more inert hard resins of part a) are compatible with, soluble in, or compatible with and soluble in, the (meth)acrylate monomers and oligomers of part c), and the vegetable oils, vegetable oil esters, and vegetable alkyd resins of part b); and/or
iv) further comprising one or more additional resins selected from the group consisting of oil-modified phenolic resins, ketone resins, aldehyde-urea resins, oil modified polyester resins, melamine resins, epoxy resins, polyurethane resins, acrylic styrene resins, and combinations thereof.

5. The lithographic radiation curable hybrid ink or coating composition of any preceding claim, wherein:
i) the (meth)acrylate oligomers of part c) are present in an amount of 0.1 wt% to 45 wt%; and/or
ii) the (meth)acrylate oligomers of part c) are present in an amount of 15 wt% to 35 wt%; and/or
iii) the (meth)acrylate oligomers of part c) have a number average molecular weight of at least 400 Daltons, such as between 400 and 3000 Daltons; and/or
iv) at least 95wt% of the (meth)acrylate oligomers present in the ink or coating composition have an acrylate functionality equal to or greater than 2, such as equal or greater than 4, or equal or greater than 6.

6. The lithographic radiation curable hybrid ink or coating composition of any preceding claim, wherein:
i) the (meth)acrylate oligomers of part c) are selected from the group consisting of acrylated oils, epoxy acrylates, polyester acrylates, acrylated polyurethanes, acrylated polyacrylates, acrylated polyethers, acrylated amines, and combinations thereof; optionally wherein the (meth)acrylate oligomers of part c) are selected from the group consisting of polyester acrylates, acrylated polyurethanes, acrylated polyethers, and combinations thereof; and/or
ii) the one or more multifunctional (meth)acrylate monomers of part c) are present in an amount of up to 35 wt%; optionally wherein the one or more multifunctional (meth)acrylate monomers of part c) are present in an amount of up to 15 wt%; and/or
iii) the one or more multifunctional (meth) acrylate monomers of part c) are selected from the group consisting of 1,2-ethylene glycol diacrylate, 1,4-butandiol diacrylate, 1,6-hexandiol diacrylate, dipropylene glycol diacrylate, neopentylglycol diacrylate, ethoxylated neopentylglycol diacrylates, propoxylated neopentylglycol diacrylates, tripropylene glycol diacrylate, bisphenol-A diacrylate, ethoxylated bisphenol-A-diacrylates, bisphenol-A-diglycidylether diacrylate, ethoxylated bisphenol-A-diacrylates, poly(ethylene)glycol diacrylates, trimethylolpropane triacrylate, trimethylolpropane trimethacrylate, ethoxylated trimethylolpropane triacrylates, propoxylated trimethylolpropane triacrylates, propoxylated glycerol triacrylates, pentaerythritol triacrylate, ethoxylated pentaerythritol triacrylates, propoxylated pentaerythritol tetraacrylates, ethoxylated pentaerythritol tetraacrylates, ditrimethylolpropane tetraacrylate, dipentaerythritol pentaacrylate, dipentaerythritol hexaacrylate, ethoxylated dipentaerythritol hexaacrylates, and combinations thereof.

7. The lithographic radiation curable hybrid ink or coating composition of any preceding claim, wherein:
i) the vegetable oils, vegetable oil esters, and vegetable alkyd resins of part b) are present in an amount between 0.1 and 30 wt%; optionally wherein the vegetable oils, vegetable oil esters, and vegetable alkyd resins of part b) are present in an amount of 10 wt% to 25 wt%; and/or
ii) the vegetable oil esters are vegetable oil fatty acid alkyl esters; and/or
iii) the vegetable oils are selected from the group consisting of drying oils, semi-drying oils, non-drying oils, and combinations thereof; optionally wherein the vegetable oils are linseed oil, soya oil, and combinations thereof.

8. The lithographic radiation curable hybrid ink or coating composition of any preceding claim:
i) comprising 0.1 wt% to 10 wt% of the monofunctional acrylate monomers of part d); and/or
ii) further comprising 0.1 wt% to 40 wt% of one or more colorants, such as 1 wt% to 20 wt% of one or more colorants; optionally wherein the one or more colorants are selected from the group consisting of inorganic pigments, organic pigments, and combinations thereof; and/or
iii) further comprising 0.1 wt% to 10 wt% of one or more extenders and/or fillers, such as between 1 wt% to 5 wt% of one or more extenders and/or fillers; optionally wherein the one or more extenders or fillers are selected from the group consisting of clay, talc, calcium carbonate, magnesium carbonate, silica, and combinations thereof.

9. The lithographic radiation curable hybrid ink or coating composition of any preceding claim, comprising between 0 to 20 wt% of one or more photoinitiators; optionally comprising 0.1 to 20 wt% of one or more photoinitiators; optionally comprising 1 to 10 wt% of one or more photoinitiators; optionally wherein the one or more photoinitiators are selected from the group consisting of oligomeric photoinitiators, polymeric photoinitiators, and combinations thereof; optionally wherein at least one of the photoinitiators is an oligomeric benzophenone derivative.

10. The lithographic radiation curable hybrid ink or coating composition of any preceding claim:
i) further comprising 0.1 wt% to 3 wt% of one or more dryers; optionally wherein the one or more dryers are each independently selected from the group consisting of fatty acid salts, heavy metal salts of organic carboxylic acid, and combinations thereof; and/or
ii) further comprising 0.1 wt% to 5 wt% one or more additives; optionally wherein the one or more additives are selected from the group consisting of surface active agents, dispersants, de-aerators, waxes, shelf-life stabilizers, wetting agents, slip agents, flow agents, fluorocarbon surfactants, silicones, organic polymeric surfactants, or combinations thereof; and/or
iii) comprising between 1 and 15wt% of one or more biobased waxes, such as between 2 and 10 wt% of one or more biobased waxes; optionally wherein the one or more biobased waxes are selected from the list consisting of waxes based on carnauba, waxes based on sugar cane, waxes based on polylactic acid, waxes based on rice bran, waxes based on hydrogenated castor oil, waxes based on poly-(hydroxybutyrate-co-hydroxyvalerate), and combinations thereof; and/or
iv) which is substantially free of mineral oil; and/or
v) comprising less than 5wt% of synethetic waxes, such as wherein the ink or coating composition is substantially free of synethetic waxes.

11. A printed article comprising the lithographic radiation curable hybrid ink or coating composition of any one of claims 1 to 10 and a substrate; optionally which forms part of a packaging article.

12. A method of making the lithographic radiation curable hybrid ink or coating composition of any preceding claim, comprising the steps of:
a) providing:
i) one or more inert hard resins selected from the group consisting of rosin resins, rosin resin derivatives, hydrocarbon resins, modified hydrocarbon resins, iso diallyl phthalate resins, non-phthalate allyl resins, and combinations thereof;
ii) non-UV raw material selected from the group consisting of inert hard resins, vegetable oils, vegetable oil esters, alkyds resins, antioxidants, and combinations thereof; and
iii) one or more multifunctional (meth)acrylate monomers and/or oligomers; and
b) mixing the components together to make the hybrid ink or coating.

13. A method of printing the lithographic radiation curable hybrid ink or coating composition of any preceding claim, comprising the steps of:
a) providing the lithographic radiation curable hybrid ink or coating;
b) printing the lithographic ink or coating onto a substrate; and
c) curing the lithographic radiation curable hybrid ink or coating.

14. The method of claim 13, wherein:
i) the curing is performed using UV-irradiation; and/or
ii) the curing is performed using electron beam radiation.

15. Use of lithographic radiation curable hybrid ink or coating composition according to any of claims 1 to 10 for improving the sustainability of packaging.

## Patentansprüche

1. Lithographische strahlungshärtbare Hybridtinte oder Beschichtungszusammensetzung umfassend:
a) 10 Gew.-% bis 30 Gew.-% an einem oder mehreren inerten Hartharzen ausgewählt aus der Gruppe bestehend aus Kolophoniumharzen, Kolophoniumharzderivaten, Kohlenwasserstoffharzen, modifizierten Kohlenwasserstoffharzen, Isodiallylphthalatharzen, Nichtphthalat-Allylharzen und Kombinationen davon,
b) 10 bis 60 % nicht-UV-Ausgangsmaterial ausgewählt aus der Gruppe bestehend aus Pflanzenölen, Pflanzenölestern, Alkydharzen, Antioxidationsmitteln und Kombinationen davon;
wobei ein nicht-UV-Ausgangsmaterial eine Verbindung ist, die inert ist und unter Photoinitiationsbedingungen nicht reagiert; und
c) 5 Gew.-% bis 45 Gew.-% an einem oder mehreren multifunktionellen (Meth)acrylatmonomeren und/oder - oligomeren;
d) 0-10 % monofunktionelle (Meth)acrylatmonomere und/oder -oligomere;
und wobei die Tinte oder Beschichtungszusammensetzung ≥ 40 % an bioerneuerbarem Gehalt umfasst, wobei der bioerneuerbare Gehalt nach dem in ASTM D6866 beschriebenen Standardverfahren gemessen wird.

2. Lithographische strahlungshärtbare Hybridtinte oder Beschichtungszusammensetzung nach Anspruch 1:
i) umfassend weniger als 5 Gew.-% Pflanzenöl(meth)acrylate; und/oder
ii) umfassend Pflanzenöle und Pflanzenölester in einer Menge von 15 Gew.-% bis 35 Gew.-%; und/oder
iii) wobei das Verhältnis der Menge an Pflanzenölen, Pflanzenölestern und Alkyden zu der Menge an (Meth)acrylatmonomeren und -oligomeren wenigstens 0,5:1,0, wie z.B. zwischen 0,5:1,0 und 2,0:1,0, beträgt; und/oder
iv) wobei Komponente b) ausgewählt ist aus der Gruppe bestehend aus Pflanzenölen, Pflanzenölestern, Alkydharzen und Kombinationen davon; und/oder
v) wobei die Tinte oder Beschichtungszusammensetzung ≥ 45 % an bioerneuerbarem Gehalt umfasst.

3. Lithographische strahlungshärtbare Hybridtinte oder Beschichtungszusammensetzung nach einem der vorstehenden Ansprüche, umfassend weniger als 20 Gew.-% an Verbindungen, die als karzinogen, mutagen oder reproduktionstoxisch (CMR) eingestuft sind, vorzugsweise weniger als 10 Gew.-% oder bevorzugter weniger als 5 Gew.-%; wobei die Zusammensetzung gegebenenfalls im Wesentlichen frei ist von Verbindungen, die als karzinogen, mutagen oder reproduktionstoxisch (CMR) eingestuft sind; wobei die CMR-Verbindungen gegebenenfalls ausgewählt sind aus der Gruppe bestehend aus Trimethylolpropantriacrylat, Silicondiacrylaten, 2-Dimethylamino-2-(4-methylbenzyl)-1-(4-morpholin-4-ylphenyl)butan-1-on und Kombinationen davon; wobei die CMR-Verbindung gegebenenfalls Trimethylolpropantriacrylat ist.

4. Lithographische strahlungshärtbare Hybridtinte oder Beschichtungszusammensetzung nach einem der vorstehenden Ansprüche:
i) wobei das eine oder die mehreren inerten Hartharze von Teil a) in einer Menge von 10 Gew.-% bis 25, wie z.B. 10 bis 20 Gew.-%, vorhanden sind; und/oder
ii) wobei die inerten Hartharze von Teil a) ausgewählt sind aus der Gruppe bestehend aus Isodiallylphthalatharz, Nichtphthalat-Allylharzen, Kolophoniumharzderivaten und Kombinationen davon; wobei das Kolophoniumharzderivat gegebenenfalls ein Phenolkolophoniumharz ist; und/oder
iii) wobei das eine oder die mehreren inerten Hartharze von Teil a) mit den (Meth)acrylatmonomeren und - oligomeren von Teil c) und den Pflanzenölen, Pflanzenölestern und Pflanzenalkydharzen von Teil b) verträglich, darin löslich oder damit verträglich und darin löslich sind; und/oder
iv) ferner umfassend ein oder mehrere zusätzliche Harze ausgewählt aus der Gruppe bestehend aus ölmodifizierten Phenolharzen, Ketonharzen, Aldehyd-Harnstoff-Harzen, ölmodifizierten Polyesterharzen, Melaminharzen, Epoxidharzen, Polyurethanharzen, Acrylstyrolharzen und Kombinationen davon.

5. Lithographische strahlungshärtbare Hybridtinte oder Beschichtungszusammensetzung nach einem der vorstehenden Ansprüche, wobei:
i) die (Meth)acrylatoligomere von Teil c) in einer Menge von 0,1 Gew.-% bis 45 Gew.-% vorhanden sind; und/oder
ii) die (Meth)acrylatoligomere von Teil c) in einer Menge von 15 Gew.-% bis 35 Gew.-% vorhanden sind; und/oder
iii) die (Meth)acrylatoligomere von Teil c) ein anzahlgemitteltes Molekulargewicht von wenigstens 400 Dalton, wie z.B. zwischen 400 und 3000 Dalton, aufweisen; und/oder
iv) wenigstens 95 Gew.-% der in der Tinte oder Beschichtungszusammensetzung vorhandenen (Meth)acrylatoligomere eine Acrylatfunktionalität von gleich oder größer als 2, wie z.B. gleich oder größer als 4 oder gleich oder größer als 6, aufweisen.

6. Lithographische strahlungshärtbare Hybridtinte oder Beschichtungszusammensetzung nach einem der vorstehenden Ansprüche, wobei:
i) die (Meth)acrylatoligomere von Teil c) ausgewählt sind aus der Gruppe bestehend aus acrylierten Ölen, Epoxyacrylaten, Polyesteracrylaten, acrylierten Polyurethanen, acrylierten Polyacrylaten, acrylierten Polyethern, acrylierten Aminen und Kombinationen davon; wobei die (Meth)acrylatoligomere von Teil c) gegebenenfalls ausgewählt sind aus der Gruppe bestehend aus Polyesteracrylaten, acrylierten Polyurethanen, acrylierten Polyethern und Kombinationen davon; und/oder
ii) das eine oder die mehreren multifunktionellen (Meth)acrylatmonomere von Teil c) in einer Menge von bis zu 35 Gew.-% vorhanden sind; wobei das eine oder die mehreren multifunktionellen (Meth)acrylatmonomere von Teil c) gegebenenfalls in einer Menge von bis zu 15 Gew.-% vorhanden sind; und/oder
iii) das eine oder die mehreren multifunktionellen (Meth)acrylatmonomere von Teil c) ausgewählt sind aus der Gruppe bestehend aus 1,2-Ethylenglycoldiacrylat, 1,4-Butandioldiacrylat, 1,6-Hexandioldiacrylat, Dipropylenglycoldiacrylat, Neopentylglycoldiacrylat, ethoxylierten Neopentylglycoldiacrylaten, propoxylierten Neopentylglycoldiacrylaten, Tripropylenglycoldiacrylat, Bisphenol-A-diacrylat, ethoxylierten Bisphenol-A-diacrylaten, Bisphenol-A-diglycidyletherdiacrylat, ethoxylierten Bisphenol-A-diacrylaten, Poly(ethylen)glycoldiacrylaten, Trimethylolpropantriacrylat, Trimethylolpropantrimethacrylat, ethoxylierten Trimethylolpropantriacrylaten, propoxylierten Trimethylolpropantriacrylaten, propoxylierten Glycerintriacrylaten, Pentaerythrittriacrylat, ethoxylierten Pentaerythrittriacrylaten, propoxylierten Pentaerythrittetraacrylaten, ethoxylierten Pentaerythrittetraacrylaten, Ditrimethylolpropantetraacrylat, Dipentaerythritpentaacrylat, Dipentaerythrithexaacrylat, ethoxylierten Dipentaerythrithexaacrylaten und Kombinationen davon.

7. Lithographische strahlungshärtbare Hybridtinte oder Beschichtungszusammensetzung nach einem der vorstehenden Ansprüche, wobei:
i) die Pflanzenöle, Pflanzenölester und Pflanzenalkydharze von Teil b) in einer Menge zwischen 0,1 und 30 Gew.-% vorhanden sind; wobei die Pflanzenöle, Pflanzenölester und Pflanzenalkydharze von Teil b) gegebenenfalls in einer Menge von 10 Gew.-% bis 25 Gew.-% vorhanden sind; und/oder
ii) die Pflanzenölester Pflanzenölfettsäurealkylester sind; und/oder
iii) die Pflanzenöle ausgewählt sind aus der Gruppe bestehend aus trocknenden Ölen, halbtrocknenden Ölen, nichttrocknenden Ölen und Kombinationen davon; wobei die Pflanzenöle gegebenenfalls Leinöl, Sojaöl und Kombinationen davon sind.

8. Lithographische strahlungshärtbare Hybridtinte oder Beschichtungszusammensetzung nach einem der vorstehenden Ansprüche:
i) umfassend 0,1 Gew.-% bis 10 Gew.-% an den monofunktionellen Acrylatmonomeren von Teil d); und/oder
ii) ferner umfassend 0,1 Gew.-% bis 40 Gew.-% an einem oder mehreren Farbmitteln, wie z.B. 1 Gew.-% bis 20 Gew.-3 an einem oder mehreren Farbmitteln; wobei das eine oder die mehreren Farbmittel gegebenenfalls ausgewählt sind aus der Gruppe bestehend aus anorganischen Pigmenten, organischen Pigmenten und Kombinationen davon; und/oder
iii) ferner umfassend 0,1 Gew.-% bis 10 Gew.-% an einem oder mehreren Streckmitteln und/oder Füllstoffen, wie z.B. zwischen 1 Gew.-% und 5 Gew.-% an einem oder mehreren Streckmitteln und/oder Füllstoffen; wobei das/der eine oder die mehreren Streckmittel oder Füllstoffe gegebenenfalls ausgewählt sind aus der Gruppe bestehend aus Ton, Talkum, Calciumcarbonat, Magnesiumcarbonat, Siliciumdioxid und Kombinationen davon.

9. Lithographische strahlungshärtbare Hybridtinte oder Beschichtungszusammensetzung nach einem der vorstehenden Ansprüche, umfassend zwischen 0 und 20 Gew.-% an einem oder mehreren Photoinitiatoren; gegebenenfalls umfassend 0,1 bis 20 Gew.-% an einem oder mehreren Photoinitiatoren; gegebenenfalls umfassend 1 bis 10 Gew.-% an einem oder mehreren Photoinitiatoren; wobei der eine oder die mehreren Photoinitiatoren gegebenenfalls ausgewählt sind aus der Gruppe bestehend aus oligomeren Photoinitiatoren, polymeren Photoinitiatoren und Kombinationen davon; wobei gegebenenfalls wenigstens einer der Photoinitiatoren ein oligomeres Benzophenonderivat ist.

10. Lithographische strahlungshärtbare Hybridtinte oder Beschichtungszusammensetzung nach einem der vorstehenden Ansprüche:
i) ferner umfassend 0,1 Gew.-% bis 3 Gew.-% an einem oder mehreren Trocknungsmitteln; wobei das eine oder die mehreren Trocknungsmittel gegebenenfalls jeweils unabhängig ausgewählt sind aus der Gruppe bestehend aus Fettsäuresalzen, Schwermetallsalzen von organischer Carbonsäure und Kombinationen davon; und/oder
ii) ferner umfassend 0,1 Gew.-% bis 5 Gew.-% an einem oder mehreren Zusatzstoffen; wobei der eine oder die mehreren Zusatzstoffe gegebenenfalls ausgewählt sind aus der Gruppe bestehend aus grenzflächenaktiven Mitteln, Dispergiermitteln, Entlüftern, Wachsen, Haltbarkeitsstabilisatoren, Netzmitteln, Gleitmitteln, Fließmitteln, Fluorkohlenstofftensiden, Siliconen, organischen polymeren Tensiden oder Kombinationen davon; und/oder
iii) umfassend zwischen 1 und 15 Gew.-% an einem oder mehreren biobasierten Wachsen, wie z.B. zwischen 2 und 10 Gew.-% an einem oder mehreren biobasierten Wachsen; wobei das eine oder die mehreren biobasierten Wachse gegebenenfalls ausgewählt sind aus der Liste bestehend aus Wachsen auf Carnaubabasis, Wachsen auf Zuckerrohrbasis, Wachsen auf Polymilchsäurebasis, Wachsen auf Reiskleiebasis, Wachsen auf der Basis von hydriertem Rizinusöl, Wachsen auf der Basis von Poly(hydroxybutyrat-co-hydroxyvalerat) und Kombinationen davon; und/oder
iv) das im Wesentlichen frei von Mineralöl ist; und/oder
v) umfassend weniger als 5 Gew.-% an synthetischen Wachsen, wie z.B. wobei die Tinte oder Beschichtungszusammensetzung im Wesentlichen frei von synthetischen Wachsen ist.

11. Bedruckter Gegenstand umfassend die lithographische strahlungshärtbare Hybridtinte oder Beschichtungszusammensetzung nach einem der Ansprüche 1 bis 10 und ein Substrat; der gegebenenfalls einen Teil eines Verpackungsgegenstands bildet.

12. Verfahren zur Herstellung der lithographischen strahlungshärtbaren Hybridtinte oder Beschichtungszusammensetzung nach einem der vorstehenden Ansprüche, umfassend die Schritte:
a) Bereitstellen:
i) ein oder mehrere inerte Hartharze ausgewählt aus der Gruppe bestehend aus Kolophoniumharzen, Kolophoniumharzderivaten, Kohlenwasserstoffharzen, modifizierten Kohlenwasserstoffharzen, Isodiallylphthalatharzen, Nichtphthalat-Allylharzen und Kombinationen davon;
ii) nicht-UV-Ausgangsmaterial ausgewählt aus der Gruppe bestehend aus inerten Hartharzen, Pflanzenölen, Pflanzenölestern, Alkydharzen, Antioxidationsmitteln und Kombinationen davon; und
iii) ein oder mehrere multifunktionelle (Meth)acrylatmonomere und/oder -oligomere; und
b) Zusammenmischen der Komponenten, um die Hybridtinte oder Beschichtung zu bilden.

13. Verfahren zum Drucken der lithographischen strahlungshärtbaren Hybridtinte oder Beschichtungszusammensetzung nach einem der vorstehenden Ansprüche, umfassend die Schritte:
a) Bereitstellen der lithographischen strahlungshärtbaren Hybridtinte oder Beschichtung;
b) Drucken der lithographischen Tinte oder Beschichtung auf ein Substrat; und
c) Härten der lithographischen strahlungshärtbaren Hybridtinte oder Beschichtung.

14. Verfahren nach Anspruch 13, wobei:
i) das Härten unter Verwendung von UV-Bestrahlung durchgeführt wird; und/oder
ii) das Härten unter Verwendung von Elektronenstrahlung durchgeführt wird.

15. Verwendung von lithographischer strahlungshärtbarer Hybridtinte oder Beschichtungszusammensetzung nach einem der Ansprüche 1 bis 10 zum Verbessern der Nachhaltigkeit von Verpackungen.

## Revendications

1. Composition d'encre ou de revêtement hybride durcissable par rayonnement lithographique comprenant :
a) 10 % en poids à 30 % en poids d'une ou plusieurs résines dures inertes choisies dans le groupe constitué par les résines de colophane, les dérivés de résine de colophane, les résines d'hydrocarbure, les résines d'hydrocarbure modifiées, les résines de phtalate d'iso-diallyle, les résines non de phtalate d'allyle, et leurs combinaisons,
b) 10 à 60 % d'une matière première non UV choisie dans le groupe constitué par les huiles végétales, les esters d'huiles végétales, les résines d'alkydes, les antioxydants et leurs combinaisons ;
dans laquelle une matière première non UV est un composé qui est inerte et ne réagit pas dans des conditions de photoinitiation ; et
c) 5 % en poids à 45 % en poids d'un ou plusieurs monomères et/ou oligomères de (méth)acrylate multifonctionnels ;
d) 0 à 10 % de monomères et/ou oligomères de (méth)acrylate monofonctionnels ;
et dans laquelle la composition d'encre ou de revêtement comprend ≥ 40 % de contenu biorenouvelable, dans laquelle le contenu biorenouvelable est mesuré selon le procédé standard décrit dans la norme ASTM D6866.

2. Composition d'encre ou de revêtement hybride durcissable par rayonnement lithographique selon la revendication 1 :
i) comprenant moins de 5 % en poids de (méth)acrylates d'huile végétale ; et/ou
ii) comprenant des huiles végétales et des esters d'huiles végétales en une quantité de 15 % en poids à 35 % en poids ; et/ou
iii) dans laquelle le rapport de la quantité d'huiles végétales, d'esters d'huiles végétales et d'alkydes sur la quantité de monomères et oligomères de (méth)acrylate est d'au moins 0,5:1,0, tel qu'entre 0,5:1,0 et 2,0:1,0 ; et/ou
iv) dans laquelle le composant b) est choisi dans le groupe constitué par les huiles végétales, les esters d'huiles végétales, les résines d'alkydes et leurs combinaisons ; et/ou
v) dans laquelle la composition d'encre ou de revêtement comprend ≥ 45 % de contenu biorenouvelable.

3. Composition d'encre ou de revêtement hybride durcissable par rayonnement lithographique selon l'une quelconque des revendications précédentes, comprenant moins de 20 % en poids de composés classés comme cancérigènes, mutagènes ou reprotoxiques (CMR), de préférence moins de 10 % en poids, ou plus préférablement moins de 5 % en poids ; éventuellement dans laquelle la composition est sensiblement exempte de composés classés comme cancérigènes, mutagènes ou reprotoxiques (CMR) ; éventuellement dans laquelle les composés CMR sont choisis dans le groupe constitué par le triacrylate de triméthylolpropane, les diacrylates de silicone, la 2-diméthylamino-2-(4-méthyl-benzyl)-1-(4-morpholin-4-yl-phényl)-butan-1-one et leurs combinaisons ; éventuellement le composé CMR est le triacrylate de triméthylolpropane.

4. Composition d'encre ou de revêtement hybride durcissable par rayonnement lithographique selon l'une quelconque des revendications précédentes :
i) dans laquelle la ou les résines dures inertes de la partie a) sont présentes en une quantité de 10 % en poids à 25, telle que de 10 à 20 % en poids ; et/ou
ii) dans laquelle les résines dures inertes de la partie a) sont choisies dans le groupe constitué par une résine de phtalate d'iso-diallyle, des résines non de phtalate d'allyle, des dérivés de résine de colophane et leurs combinaisons ; éventuellement dans laquelle le dérivé de résine de colophane est une résine de colophane phénolique ; et/ou
iii) dans laquelle la ou les résines dures inertes de la partie a) sont compatibles avec, solubles dans, ou compatibles avec et solubles dans, les monomères et oligomères de (méth)acrylate de la partie c), et les huiles végétales, les esters d'huiles végétales et les résines d'alkydes végétales de la partie b) ; et/ou
iv) comprenant en outre une ou plusieurs résines supplémentaires choisies dans le groupe constitué par les résines phénoliques modifiées par une huile, les résines de cétone, les résines d'aldéhyde-urée, les résines de polyester modifiées par une huile, les résines de mélamine, les résines d'époxy, les résines de polyuréthane, les résines de styrène acrylique, et leurs combinaisons.

5. Composition d'encre ou de revêtement hybride durcissable par rayonnement lithographique selon l'une quelconque des revendications précédentes, dans laquelle :
i) les oligomères de (méth)acrylate de la partie c) sont présents en une quantité de 0,1 % en poids à 45 % en poids ; et/ou
ii) les oligomères de (méth)acrylate de la partie c) sont présents en une quantité de 15 % en poids à 35 % en poids ; et/ou
iii) les oligomères de (méth)acrylate de la partie c) ont un poids moléculaire moyen en nombre d'au moins 400 Daltons, tel que compris entre 400 et 3 000 Daltons ; et/ou
iv) au moins 95 % en poids des oligomères de (méth)acrylate présents dans la composition d'encre ou de revêtement ont une fonctionnalité d'acrylate égale ou supérieure à 2, telle qu'égale ou supérieure à 4, ou égale ou supérieure à 6.

6. Composition d'encre ou de revêtement hybride durcissable par rayonnement lithographique selon l'une quelconque des revendications précédentes, dans laquelle :
i) les oligomères de (méth)acrylate de la partie c) sont choisis dans le groupe constitué par les huiles acrylées, les acrylates d'époxy, les acrylates de polyester, les polyuréthanes acrylés, les polyacrylates acrylés, les polyéthers acrylés, les amines acrylées et leurs combinaisons ; éventuellement, dans laquelle les oligomères de (méth)acrylate de la partie c) sont choisis dans le groupe constitué par les acrylates de polyester, les polyuréthanes acrylés, les polyéthers acrylés et leurs combinaisons ; et/ou
ii) le ou les monomères de (méth)acrylate multifonctionnels de la partie c) sont présents en une quantité allant jusqu'à 35 % en poids ; éventuellement, dans laquelle le ou les monomères de (méth)acrylate multifonctionnels de la partie c) sont présents en une quantité allant jusqu'à 15 % en poids ; et/ou
iii) le ou les monomères de (méth)acrylate multifonctionnels de la partie c) sont choisis dans le groupe constitué par diacrylate de 1,2-éthylène glycol, diacrylate de 1,4-butanediol, diacrylate de 1,6-hexandiol, diacrylate de dipropylène glycol, diacrylate de néopentylglycol, diacrylates de néopentylglycol éthoxylés, diacrylates de néopentylglycol propoxylés, diacrylate de tripropylène glycol, diacrylate de bisphénol-A, diacrylates de bisphénol-A éthoxylés, diacrylate de bisphénol-A-diglycidyléther, diacrylates de bisphénol-A éthoxylés, diacrylates de poly(éthylène)glycol, triacrylate de triméthylolpropane, triméthacrylate de triméthylolpropane, triacrylates de triméthylolpropane éthoxylés, triacrylates de triméthylolpropane propoxylés, triacrylates de glycérol propoxylés, triacrylate de pentaérythritol, triacrylates de pentaérythritol éthoxylés, tétraacrylates de pentaérythritol propoxylés, tétraacrylates de pentaérythritol éthoxylés, tétraacrylate de ditriméthylolpropane, pentaacrylate de dipentaérythritol, hexaacrylate de dipentaérythritol, hexaacrylates de dipentaérythritol éthoxylés et leurs combinaisons.

7. Composition d'encre ou de revêtement hybride durcissable par rayonnement lithographique selon l'une quelconque des revendications précédentes, dans laquelle :
i) les huiles végétales, les esters d'huiles végétales et les résines d'alkydes végétales de la partie b) sont présents en une quantité comprise entre 0,1 et 30 % en poids ; éventuellement dans laquelle les huiles végétales, les esters d'huiles végétales et les résines d'alkydes végétales de la partie b) sont présents en une quantité comprise entre 10 % en poids et 25 % en poids ; et/ou
ii) les esters d'huiles végétales sont des esters alkyliques d'acides gras d'huiles végétales ; et/ou
iii) les huiles végétales sont choisies dans le groupe constitué par les huiles siccatives, les huiles semi-siccatives, les huiles non siccatives et leurs combinaisons ; éventuellement, dans laquelle les huiles végétales sont l'huile de lin, l'huile de soja et leurs combinaisons.

8. Composition d'encre ou de revêtement hybride durcissable par rayonnement lithographique selon l'une quelconque des revendications précédentes :
i) comprenant de 0,1 % en poids à 10 % en poids des monomères d'acrylate monofonctionnels de la partie d) ; et/ou
ii) comprenant en outre de 0,1 % en poids à 40 % en poids d'une ou plusieurs matières colorantes, tel que 1 % en poids à 20 % en poids d'une ou plusieurs matières colorantes ; éventuellement, dans laquelle la ou les matières colorantes sont choisies dans le groupe constitué par des pigments inorganiques, des pigments organiques et leurs combinaisons ; et/ou
iii) comprenant en outre de 0,1 % en poids à 10 % en poids d'un ou plusieurs diluants et/ou charges, tel qu'entre 1 % en poids et 5 % en poids d'un ou plusieurs diluants et/ou charges ; éventuellement, dans laquelle le/la ou les diluants ou charges sont choisi(e)s dans le groupe constitué par l'argile, le talc, le carbonate de calcium, le carbonate de magnésium, la silice, et leurs combinaisons.

9. Composition d'encre ou de revêtement hybride durcissable par rayonnement lithographique selon l'une quelconque des revendications précédentes, comprenant entre 0 et 20 % en poids d'un ou plusieurs photoinitiateurs ; comprenant éventuellement 0,1 à 20 % en poids d'un ou plusieurs photoinitiateurs ; comprenant éventuellement 1 à 10 % en poids d'un ou plusieurs photoinitiateurs ; éventuellement dans laquelle le ou les photoinitiateurs sont choisis dans le groupe constitué par les photoinitiateurs oligomériques, les photoinitiateurs polymériques et leurs combinaisons ; éventuellement dans laquelle au moins l'un des photoinitiateurs est un dérivé de benzophénone oligomérique.

10. Composition d'encre ou de revêtement hybride durcissable par rayonnement lithographique selon l'une quelconque des revendications précédentes :
i) comprenant en outre de 0,1 % en poids à 3 % en poids d'un ou plusieurs sécheurs ; éventuellement, le ou les sécheurs étant choisis chacun indépendamment dans le groupe constitué par des sels d'acides gras, des sels de métaux lourds d'acide carboxylique organique, et leurs combinaisons ; et/ou
ii) comprenant en outre de 0,1 % en poids à 5 % en poids d'un ou plusieurs additifs ; éventuellement, l'additif ou les additifs étant choisis dans le groupe constitué par les agents actifs en surface, les dispersants, les désaérateurs, les cires, les stabilisants de durée de conservation, les agents mouillants, les agents glissants, les agents d'écoulement, les tensioactifs de fluorocarbure, les silicones, les tensioactifs polymériques organiques ou leurs combinaisons ; et/ou
iii) comprenant entre 1 et 15 % en poids d'une ou de plusieurs cires biosourcées, tel qu'entre 2 et 10 % en poids d'une ou de plusieurs cires biosourcées ; éventuellement, dans laquelle la ou les cires biosourcées sont choisies dans la liste comprenant des cires à base de carnauba, des cires à base de canne à sucre, des cires à base de poly(acide lactique), des cires à base de son de riz, des cires à base d'huile de ricin hydrogénée, des cires à base de poly-(hydroxybutyrate-co-hydroxyvalérate), et leurs combinaisons ; et/ou
iv) qui est sensiblement exempte d'huile minérale ; et/ou
v) comprenant moins de 5 % en poids de cires synthétiques, tel que la composition d'encre ou de revêtement est sensiblement exempte de cires synthétiques.

11. Article imprimé comprenant la composition d'encre ou de revêtement hybride durcissable par rayonnement lithographique selon l'une quelconque des revendications 1 à 10 et un substrat ; qui forme éventuellement une partie d'un article d'emballage.

12. Procédé de fabrication de la composition d'encre ou de revêtement hybride durcissable par rayonnement lithographique selon l'une quelconque des revendications précédentes, comprenant les étapes de :
a) fourniture :
i) d'une ou plusieurs résines dures inertes choisies dans le groupe constitué par les résines de colophane, les dérivés de résine de colophane, les résines d'hydrocarbure, les résines d'hydrocarbure modifiées, les résines de phtalate d'iso-diallyle, les résines non de phtalate d'allyle et leurs combinaisons ;
ii) d'une matière première non UV choisie dans le groupe constitué par les résines dures inertes, les huiles végétales, les esters d'huiles végétales, les résines d'alkydes, les antioxydants, et leurs combinaisons ; et
iii) d'un ou plusieurs monomères et/ou oligomères de (méth)acrylate multifonctionnels ; et
b) mélange des composants ensemble pour préparer l'encre ou le revêtement hybride.

13. Procédé d'impression de la composition d'encre ou de revêtement hybride durcissable par rayonnement lithographique selon l'une quelconque des revendications précédentes, comprenant les étapes de :
a) fourniture de l'encre ou du revêtement hybride durcissable par rayonnement lithographique ;
b) impression de l'encre ou du revêtement lithographique sur un substrat ; et
c) durcissement de l'encre ou du revêtement hybride durcissable par rayonnement lithographique.

14. Procédé selon la revendication 13, dans lequel
i) le durcissement est effectué par irradiation UV ; et/ou
ii) le durcissement est effectué par rayonnement de faisceau d'électrons.

15. Utilisation d'une composition d'encre ou de revêtement hybride durcissable par rayonnement lithographique selon l'une quelconque des revendications 1 à 10 pour améliorer la durabilité d'un emballage.
